# EUROPEAN PATENT APPLICATION

(11) **EP 4 535 871 A1**
(43) Date of publication of application: **09.04.2025**
(21) Application number: 22943250.5
(22) Date of filing: 27.05.2022
(51) Int. Cl.: H04W 48/02, H04W 48/20

(54) **METHOD AND APPARATUS FOR MAINTAINING WIRELESS CONNECTION**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2022/095779
(87) International publication number: WO 2023/226053

(57) **Abstract**

The present disclosure provides a method and apparatus for maintaining a wireless connection, a device and a storage medium, and belongs to the field of communications. The method comprises: in response to a terminal device being in a first specific state and the terminal device not obtaining first system information of a system information block, confirming that a target cell is forbidden and/or performing cell reselection. The present disclosure provides a processing method for "the maintenance of a wireless connection ", so that the terminal device can perform cell reselection when the terminal device cannot obtain system information, and the terminal device and a network device can establish a wireless connection, so that an uninterrupted wireless connection is ensured, thus increasing the stability of wireless communication.

## Description

### TECHNICAL FIELD

The present disclosure relates to the field of communication technology, in particular to a wireless connection maintenance method, an apparatus, a device and a storage medium.

### BACKGROUND

**In** a communication system, Non-Terrestrial Network (NTN) is an important technology introduced in a 5^{th}-Generation (5G) mobile communication technology, and it provides radio resources via satellites (or unmanned aerial vehicles) rather than ground base stations. In a case that a terminal device cannot obtain a System Information Block (SIB) 19, the terminal device cannot establish a wireless connection with a network side device, so the wireless connection is interrupted. Hence, there is an urgent need to provide a wireless connection maintenance method, so as to enable the terminal device to perform cell reselection to establish the wireless connection with the network side device in a case that it is impossible to obtain system information, thereby to ensure that the wireless connection is not interrupted, and improve the wireless communication stability.

### SUMMARY

An object of the present disclosure is to provide a wireless connection maintenance method, an apparatus, a device and a storage medium, so as to enable a terminal device to perform cell reselection to establish a wireless connection with a network side device in a case that it is impossible to obtain system information, thereby to ensure that the wireless connection is not interrupted, and improve the wireless communication stability.

**In** a first aspect, the present disclosure provides in some embodiments a wireless connection maintenance method, executed by a terminal device, including: determining that a target cell is forbidden and/or performing a cell reselection in response to the terminal device being in a first specific state and the terminal device having not obtained first system information.

Optionally, in one embodiment of the present disclosure, the determining that the target cell is forbidden and/or performing the cell reselection in response to the terminal device being in the first specific state and the terminal device having not obtained the first system information includes: determining that the target cell is forbidden and/or performing the cell reselection in response to the terminal device being in the first specific state, the terminal device initiating an RRC connection and the terminal device having not obtained the first system information.

Optionally, in one embodiment of the present disclosure, the determining that the target cell is forbidden and/or performing the cell reselection in response to the terminal device being in the first specific state and the terminal device having not obtained the first system information includes: re-obtaining the first system information in response to the terminal device being in the first specific state, the terminal device initiating an RRC connection and the terminal device having not obtained the first system information; and in response to the first system information being not re-obtained within a predetermined duration, determining that the target cell is forbidden or performing the cell reselection.

Optionally, in one embodiment of the present disclosure, the determining that the target cell is forbidden and/or performing the cell reselection in response to the terminal device being in the first specific state and the terminal device having not obtained the first system information includes: determining that the target cell is forbidden and/or performing the cell reselection in response to the terminal device being in the first specific state, and the terminal device having not obtained the first system information before the terminal device initiates an RRC connection recovery procedure or in a case that the terminal device initiates the RRC connection recovery procedure.

Optionally, in one embodiment of the present disclosure, the determining that the target cell is forbidden and/or performing the cell reselection in response to the terminal device having not obtained the first system information includes: re-obtaining the first system information in response to the terminal device being in the first specific state and the terminal device having not obtained the first system information before the terminal device initiates a connection recovery procedure or in a case that the terminal device initiates a connection procedure; and in response to the first system information being not re-obtained within a predetermined duration, determining that the target cell is forbidden and/or performing the cell reselection.

Optionally, in one embodiment of the present disclosure, the determining that the target cell is forbidden and/or performing the cell reselection in response to the terminal device being in the first specific state and the terminal device having not obtained the first system information includes: determining that the target cell is forbidden and/or performing the cell reselection in response to the terminal device being in the first specific state, an uplink synchronization validity timer associated with the first system information expired and the terminal device having not obtained the first system information.

Optionally, in one embodiment of the present disclosure, the determining that the target cell is forbidden and/or performing the cell reselection in response to the terminal device being in the first specific state and the terminal device having not obtained the first system information includes: determining that the target cell is forbidden and/or performing the cell reselection in response to the terminal device being in the first specific state, and the terminal device having not obtained the first system information within a predetermined duration after an uplink synchronization validity timer associated with the first system information expires.

Optionally, in one embodiment of the present disclosure, the wireless connection maintenance method further includes at least one of: determining the predetermined duration based on a Master Information Block (MIB) or a SIB sent by a network side device, wherein the MIB carries a duration configuration, and the SIB carries the duration configuration; and determining the predetermined duration based on a system agreement.

Optionally, in one embodiment of the present disclosure, the wireless connection maintenance method further includes: determining that the target cell is forbidden and/or performing the cell reselection in response to the terminal device being a NTN-capable terminal device and the terminal device having not obtained the first system information.

Optionally, in one embodiment of the present disclosure, the determining that the target cell is forbidden and/or performing the cell reselection in response to the terminal device being in the first specific state and the terminal device having not obtained the first system information includes: determining that the target cell is forbidden within a predetermined duration in response to the terminal device being in the first specific state and the terminal device having not obtained the first system information; and selecting or reselecting a cell at a same frequency as the target cell.

Optionally, in one embodiment of the present disclosure, the determining that the target cell is forbidden within the predetermined duration in response to the terminal device being in the first specific state and the terminal device having not obtained the first system information includes: in response to a cell system message indicating that an intraFreq Reselection is allowed, determining that the target cell is forbidden within the predetermined duration in response to the terminal device being in the first specific state and the terminal device having not obtained the first system information.

Optionally, in one embodiment of the present disclosure, the determining that the target cell is forbidden within the predetermined duration in response to the terminal device having not obtained the first system information includes: in response to a cell system message indicating that an intraFreq Reselection is allowed or the cell system message indicating that the intraFreq Reselection is not allowed, determining that the target cell is forbidden within the predetermined duration in response to the terminal device being in the first specific state and the terminal device having not obtained the first system information.

Optionally, in one embodiment of the present disclosure, the determining that the target cell is forbidden and/or performing the cell reselection in response to the terminal device being in the first specific state and the terminal device having not obtained the first system information includes: determining that the target cell and other cells at a same frequency as the target cell are all forbidden within a predetermined duration and performing the cell reselection in response to the terminal device being in the first specific state and the terminal device having not obtained the first system information.

Optionally, in one embodiment of the present disclosure, the determining that the target cell and the other cells at the same frequency as the target cell are all forbidden within the predetermined duration and performing the cell reselection in response to the terminal device being in the first specific state and the terminal device having not obtained the first system information includes: in response to a cell system message indicating that an intraFreq Reselection is allowed, determining that the target cell and the other cells at the same frequency as the target cell are all forbidden within the predetermined duration and performing the cell reselection in response to the terminal device being in the first specific state and the terminal device having not obtained the first system information.

Optionally, in one embodiment of the present disclosure, the cell system message is an MIB.

Optionally, in one embodiment of the present disclosure, the terminal device being in the first specific state includes at least one of: the terminal device being in an idle state; the terminal device being in an inactive state; or the terminal device being in a connected state in a case that a timer T311 operates.

In a second aspect, the present disclosure provides in some embodiments a wireless connection maintenance method, executed by a terminal device, including: determining that there is valid second system information before initiating a connection establishment procedure or a connection recovery procedure in response to the terminal device being in a second specific state.

Optionally, in one embodiment of the present disclosure, the determining that there is the valid second system information before initiating the connection establishment procedure or the connection recovery procedure includes: in response to the terminal device being a NTN-capable terminal device, determining that there is the valid second system information before initiating the connection establishment procedure or the connection recovery procedure.

Optionally, in one embodiment of the present disclosure, the terminal device being in the second specific state includes at least one of: the terminal device being in an idle state; or the terminal device being in an inactive state.

In a third aspect, the present disclosure provides in some embodiments a wireless connection maintenance method, executed by a network side device, including: establishing a wireless connection with a terminal device in response to cell reselection information sent by the terminal device.

Optionally, in one embodiment of the present disclosure, the wireless connection maintenance method further includes: sending an MIB or a SIB to the terminal device, wherein the MIB carries a duration configuration, and the SIB carries the duration configuration.

In a fourth aspect, the present disclosure provides in some embodiments a wireless connection maintenance apparatus, including: a reselection module configured to determine that a target cell is forbidden and/or perform cell reselection in response to a terminal device being in a first specific state and the terminal device having not obtained first system information.

In a fifth aspect, the present disclosure provides in some embodiments a wireless connection maintenance apparatus, including: a determination module configured to determine that there is valid second system information before initiating a connection establishment procedure or a connection recovery procedure in response to a terminal device being in a second specific state.

In a sixth aspect, the present disclosure provides in some embodiments a wireless connection maintenance apparatus, including: an establishment module configured to establish a wireless connection with a terminal device in response to cell reselection information sent by the terminal device.

In a seventh aspect, the present disclosure provides in some embodiments a terminal device, including a processor and a memory. The memory is configured to store therein a computer program, and the processor is configured to execute the computer program stored in the memory to implement the wireless connection maintenance method in the first aspect.

In an eighth aspect, the present disclosure provides in some embodiments a terminal device, including a processor and a memory. The memory is configured to store therein a computer program, and the processor is configured to execute the computer program stored in the memory to implement the wireless connection maintenance method in the second aspect.

In a ninth aspect, the present disclosure provides in some embodiments a terminal device, including a processor and a memory. The memory is configured to store therein a computer program, and the processor is configured to execute the computer program stored in the memory to implement the wireless connection maintenance method in the third aspect.

In a tenth aspect, the present disclosure provides in some embodiments a communication apparatus, including a processor and an interface circuit. The interface circuit is configured to receive a code instruction and transmit the code instruction to the processor; and the processor is configured to execute the code instruction to implement the wireless connection maintenance method in the first aspect.

In an eleventh aspect, the present disclosure provides in some embodiments a communication apparatus, including a processor and an interface circuit. The interface circuit is configured to receive a code instruction and transmit the code instruction to the processor; and the processor is configured to execute the code instruction to implement the wireless connection maintenance method in the second aspect.

In a twelfth aspect, the present disclosure provides in some embodiments a communication apparatus, including a processor and an interface circuit. The interface circuit is configured to receive a code instruction and transmit the code instruction to the processor; and the processor is configured to execute the code instruction to implement the wireless connection maintenance method in the third aspect.

In a thirteenth aspect, the present disclosure provides in some embodiments a computer-readable storage medium storing therein an instruction. The instruction is executed to implement the wireless connection maintenance method in the first aspect.

In a fourteenth aspect, the present disclosure provides in some embodiments a computer-readable storage medium storing therein an instruction. The instruction is executed to implement the wireless connection maintenance method in the second aspect.

In a fifteenth aspect, the present disclosure provides in some embodiments a computer-readable storage medium storing therein an instruction. The instruction is executed to implement the wireless connection maintenance method in the third aspect.

In a word, in the embodiments of the present disclosure, in response to the terminal device being in the first specific state and the terminal device having not obtained the first system information of the SIB, the terminal device determines that the target cell is forbidden and/or performs the cell reselection. In the embodiments of the present disclosure, in response to the first system information being not obtained, the terminal device determines that the target cell is forbidden, and/or performs the cell reselection. By determining that the target cell is forbidden, it is able to improve the determination accuracy of the forbidden target cell. In addition, with the cell reselection, it is able to establish the connection with the network side device, thereby to reduce the circumstances where the terminal device cannot establish the wireless connection with the network side device. With respect to wireless connection maintenance, the present disclosure provides a processing method, so as to enable the terminal device to perform the cell reselection to establish the wireless connection with the network side device in a case that it is impossible to obtain system information, thereby to ensure that the wireless connection is not interrupted, and improve the wireless communication stability.

### BRIEF DESCRIPTION OF THE DRAWINGS

The above-mentioned and/or other aspects and advantages of the present disclosure may become apparent and easily understandable in the following description in conjunction with the drawings.
FIG. 1 is a schematic view showing architecture of a wireless connection maintenance system according to the embodiment of the present disclosure;
FIG. 2 is an illustrative schematic view showing a transparent transmission mode according to the embodiment of the present disclosure;
FIG. 3 is an illustrative schematic view showing a retransmission mode according to the embodiment of the present disclosure;
FIG. 4 is an illustrative schematic view showing a transmission delay according to the embodiment of the present disclosure;
FIG. 5 is an illustrative schematic view showing a timing synchronization according to the embodiment of the present disclosure;
FIG. 6 is a flow chart of a wireless connection maintenance method according to the embodiment of the present disclosure;
FIG. 7 is another flow chart of the wireless connection maintenance method according to the embodiment of the present disclosure;
FIG. 8 is yet another flow chart of the wireless connection maintenance method according to the embodiment of the present disclosure;
FIG. 9 is still yet another flow chart of the wireless connection maintenance method according to the embodiment of the present disclosure;
FIG. 10 is still yet another flow chart of the wireless connection maintenance method according to the embodiment of the present disclosure;
FIG. 11 is still yet another flow chart of the wireless connection maintenance method according to the embodiment of the present disclosure;
FIG. 12 is still yet another flow chart of the wireless connection maintenance method according to the embodiment of the present disclosure;
FIG. 13 is still yet another flow chart of the wireless connection maintenance method according to the embodiment of the present disclosure;
FIG. 14 is still yet another flow chart of the wireless connection maintenance method according to the embodiment of the present disclosure;
FIG. 15 is still yet another flow chart of the wireless connection maintenance method according to the embodiment of the present disclosure;
FIG. 16 is still yet another flow chart of the wireless connection maintenance method according to the embodiment of the present disclosure;
FIG. 17 is still yet another flow chart of the wireless connection maintenance method according to the embodiment of the present disclosure;
FIG. 18 is still yet another flow chart of the wireless connection maintenance method according to the embodiment of the present disclosure;
FIG. 19 is a schematic view showing a wireless connection maintenance apparatus according to the embodiment of the present disclosure;
FIG. 20 is another schematic view showing the wireless connection maintenance apparatus according to the embodiment of the present disclosure;
FIG. 21 is yet another schematic view showing the wireless connection maintenance apparatus according to the embodiment of the present disclosure;
FIG. 22 is a block diagram of a terminal device according to one embodiment of the present disclosure; and
FIG. 23 is a block diagram of a network side device according to one embodiment of the present disclosure.

### DETAILED DESCRIPTION

The present disclosure will be described hereinafter in detail in conjunction with illustrative embodiments, and examples thereof are shown in the drawings. Unless otherwise specified, identical numerals in different drawings represent identical or similar elements. The implementations in the following description do not include all implementations consistent with the embodiments of the present disclosure, and in contrast, they are merely examples of devices and methods consistent with some aspects of the embodiments of the present disclosure as specified in the appended claims.

The terms used in embodiments of the present disclosure are for illustrative purposes only, but do not intend to limit the present disclosure. Such a singular form as "one" or "the" used in the embodiments of the present disclosure and the appended claims also intends to include a plural form, unless otherwise defined. It should be appreciated that, the expression "and/or" used in the context is meant to include any combination, or all possible combinations, of one or more associated items.

It should be appreciated that, although such expressions as "first", "second" and "third" are used to describe various information, the information are not limited by these expressions. These expressions are merely used to differentiate the information of a same type from each other. For example, without departing from the scope of the present disclosure, first information may also be called as second information, and similarly second information may also be called as first information. Depending on the context, such a word as "if" may be construed as "in a case that ...", "in the case that ..." or "in response to determining that ...".

Network elements or network functions involved in the embodiments of the present disclosure may be implemented through separate hardware devices, or through software in the hardware devices, which will not be particularly defined herein.

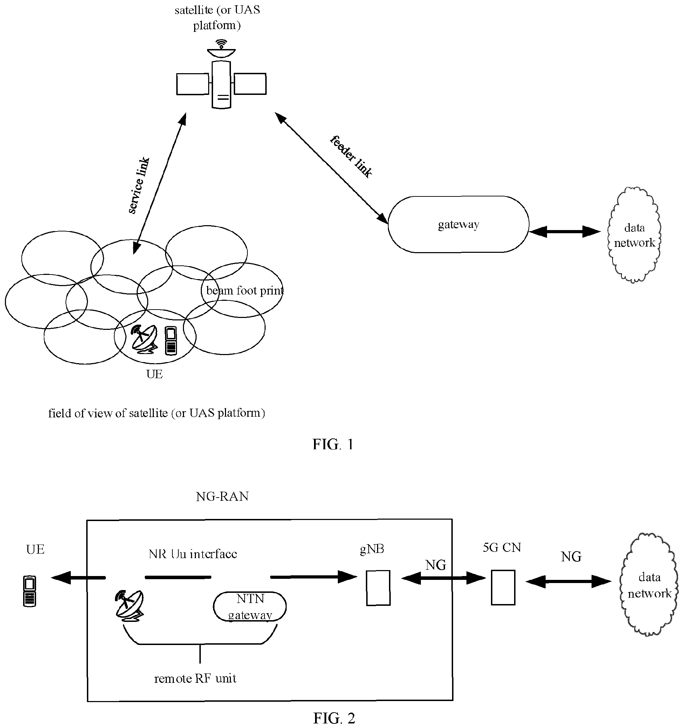

In a communication system, NTN is an important technology in 5G. The NTN provides radio resources through a satellite (or unmanned aerial vehicle) rather than a ground base station. FIG. 1 is a schematic view showing architecture of a wireless connection maintenance system according to the embodiment of the present disclosure. As shown in FIG. 1, the wireless connection maintenance system includes a User Equipment (UE), a beam foot print, a service link, a satellite, a Unmanned Aircraft System (UAS) platform, a feeder link, a gateway, a data network, and a field of view of the satellite. Depending on different modes for processing a signal by the satellite, a transparent transmission mode and a retransmission mode are provided.

In one embodiment of the present disclosure, Fig. 2 is an illustrative schematic view showing the transparent transmission mode according to the embodiment of the present disclosure. As shown in FIG. 2, a NTN ground station sends a gNB signal to the satellite, and the satellite converts the signal to be at a satellite frequency band and then issues the converted signal to a LTE. Apart from frequency conversion and signal amplification, the satellite does not demodulate the gNB signal. The satellite is similar to a repeater. A 5G base station is called as gNB, and it provides NR user plane and control plane protocol terminal nodes for the UE, and it is connected to a 5G Core network (5GC) via a NG interface.

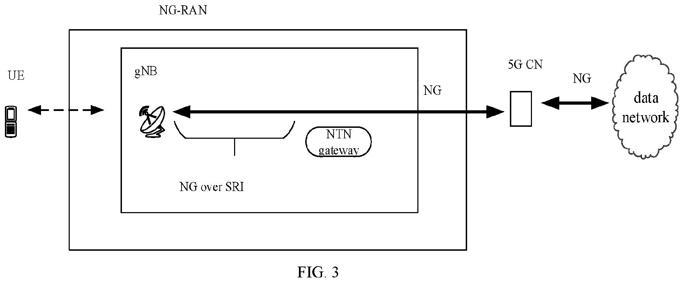

In one embodiment of the present disclosure, FIG. 3 is an illustrative schematic view showing the retransmission mode according to the embodiment of the present disclosure. As shown in FIG. 3, the NTN ground station sends the gNB signal to the satellite. The satellite demodulates and decodes the signal, then recodes and remodulates the signal (this process is just retransmission), and then sends the retransmitted signal in the satellite frequency band.

In one embodiment of the present disclosure, Table 1 shows a satellite altitude, an orbit and a satellite coverage range of a typical NTN network provided in the embodiments of the present disclosure.

**Table 1**

| Platforms | Altitude range | Orbit | Typical beam footprint size |
|---|---|---|---|
| Low-Earth Orbit (LEO) satellite | 300-1500km | Circular around the earth | 100-1000km |
| Medium-Earth Orbit (MEO) satellite | 7000-25000km | | 100-1000km |
| Geostationary Earth Orbit (GEO) satellite | 35786km | notional station keeping position fixed in terms of elevation/azimuth with respect to a given earth point | 200-3500km |
| UAS platform (including HAPS) | 8-50km(20 km for HAPS) | | 5-200km |
| High Elliptical Orbit (HEO) satellite | 400-50000km | Elliptical around the earth | 200-3500km |

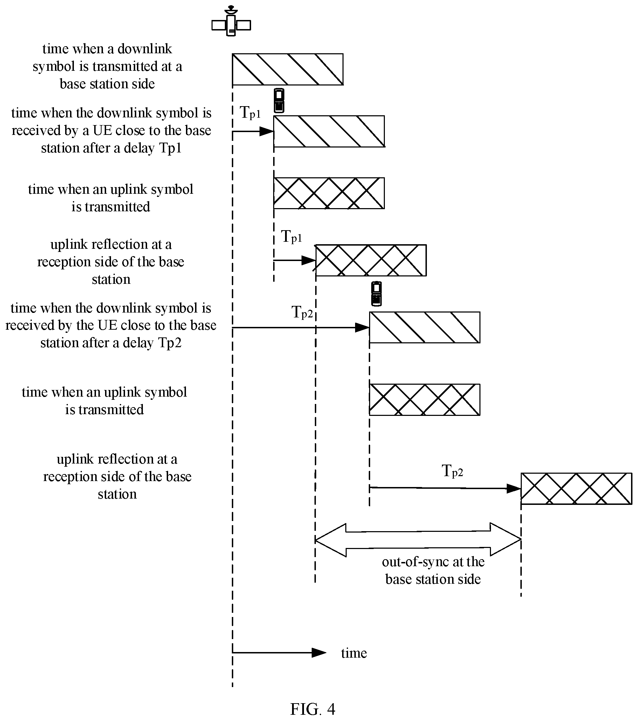

In one embodiment of the present disclosure, a 5G network is a synchronization network, and the UE needs to ensure uplink and downlink synchronization. FIG. 4 is an illustrative schematic view showing a transmission delay according to the embodiment of the present disclosure. As shown in FIG. 4, the UE receives a downlink synchronization signal sent by a base station to achieve downlink synchronization. After achieving the downlink synchronization, the UE needs to perform uplink synchronization, so as to ensure that a time when the uplink signals from all the UEs arrive at the base station is aligned with an uplink time of the base station. A random access is initiated to achieve the uplink synchronization. To be specific, the UE sends a preamble to the base station, and the base station obtains the transmission delay between the UE and the base station by receiving the preamble. Then, the base station issues a Timing Advance (TA) command to the UE (e.g., a TA value is twice the transmission delay), and the UE performs the uplink transmission in advance based on a value indicated by TA, so as to achieve the uplink synchronization.

In one embodiment of the present disclosure, for example, the preamble includes a UE transmission time, and the base station determines the transmission delay based on a time when the preamble is received and the UE transmission time.

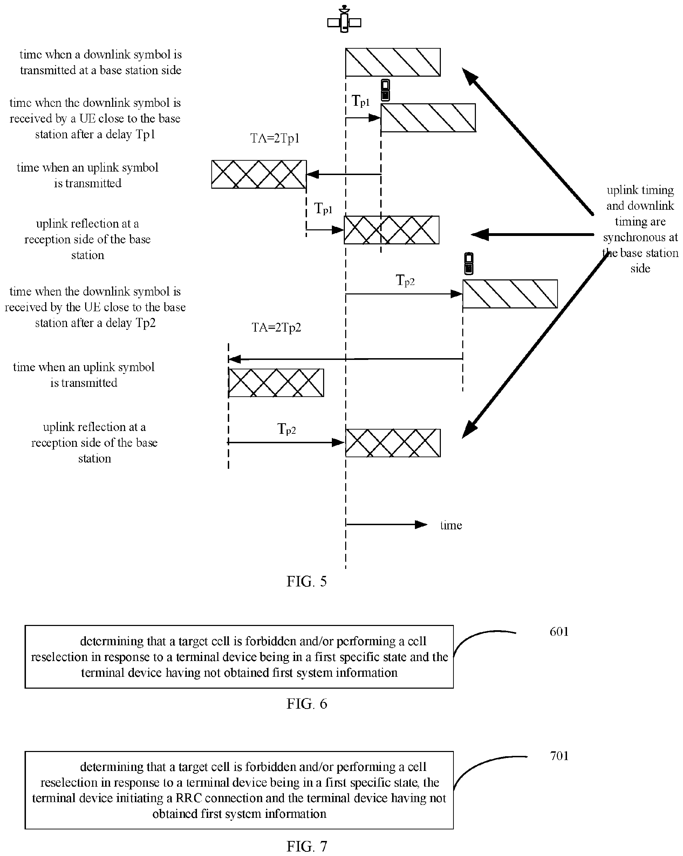

In one embodiment of the present disclosure, FIG. 5 is an illustrative schematic view showing timing synchronization according to the embodiment of the present disclosure. As shown in FIG. 5, a downlink signal sent by the base station to the UE may experience a unidirectional propagation delay, so a downlink timing of the UE is delayed by one unidirectional propagation delay relative to the base station. In a case that the UE performs the uplink transmission after aligning its uplink timing and its downlink timing, a signal may arrive at the base station after another unidirectional propagation delay. Hence, at a base station end, the uplink timing is delayed by one Round Trip Time (RTT) relative to the downlink timing. The RTTs between different UEs and the base station are different, so the uplink timing of different UEs is not aligned with each other, and thereby an interference is caused for the data transmission of the UEs. In order to solve this problem, the base station sends a TA adjustment command to the UE, so as to move forward the uplink timing of the UE by one RTT, so as to ensure that the uplink timing of all the UEs is aligned with each other at the base station end. Due to different distances between different UEs and the base station, different UEs correspond to different TAs, i.e., the TA values corresponding to different UEs may be different.

In one embodiment of the present disclosure, apart from a common TA to be compensated by the UE, the network side device also broadcasts ephemeris information about the satellite, so as to help the UE to obtain a position of the satellite, thereby to facilitate the calculation of the RTT from the UE to the satellite. Due to the mobility of the satellite, the common TA and the ephemeris information may change, so there is a valid time for the ephemeris information and the common TA broadcast in a system message, which is called as UL synchronization validity timer. The network side device sends the ephemeris information and the common TA in one SIB, and the ephemeris information and the common TA share one UL synchronization validity timer. A value of the UL synchronization validity timer is broadcast by the network side device to the UE.

For example, in one embodiment of the present disclosure, the UE starts the UL synchronization validity timer based on an epoch time corresponding to the ephemeris information and the common TA in the broadcast message.

A wireless connection maintenance method, an apparatus, a device and a storage medium provided in the embodiments of the present disclosure will be described in details hereinafter in conjunction with the drawings.

FIG. 6 is a flow chart of a wireless connection maintenance method according to the embodiment of the present disclosure, and this method is executed by a terminal device. As shown in FIG. 6, the method includes the following step.

Step 601: a target cell being forbidden is determined and/or a cell reselection is performed in response to a terminal device being in a first specific state and the terminal device having not obtained first system information.

It should be appreciated that, in one embodiment of the present disclosure, the terminal device may be a device for providing voice and/or data connectivity to a user. The terminal device may communicate with one or more core networks via a Radio Access Network (RAN). The terminal device may be an Internet of Things (IoT) terminal, e.g., a sensor device or a mobile phone (also called as cellular phone), or a computer having the IoT terminal, e.g., an immobile, portable, pocket-sized, handheld, built-in or vehicle-mounted device. For example, the terminal device may be a Station (STA), a subscriber unit, a subscriber station, a mobile station, a mobile, a remote station, an access point, a remote terminal, an access terminal, a user terminal or a user agent. The terminal device may also be a device for an unmanned aerial vehicle. The terminal device may also be a vehicle-mounted device, e.g., an electronic control unit having a wireless communication function, or a wireless terminal coupled to an external electronic control unit. Alternatively, the terminal device may also be a roadside device, e.g., a street lamp or a signal lamp having a wireless communication function, or any other roadside devices.

In one embodiment of the present disclosure, the terminal device uses the first system information as essential system information.

In one embodiment of the present disclosure, the first system information does not specifically refer to fixed system information, and the word "first" is merely used to differentiate the first system information from second system information. For example, the first system information is SIB 19. For example, the terminal device uses SIB 19 as the essential system information.

In one embodiment of the present disclosure, the determining that the target cell is forbidden and/or performing the cell reselection in response to the terminal device being in the first specific state and the terminal device having not obtained the first system information includes: determining that the target cell is forbidden and/or performing the cell reselection in response to the terminal device being in the first specific state, the terminal device initiating an RRC connection and the terminal device having not obtained the first system information.

In one embodiment of the present disclosure, the determining that the target cell is forbidden and/or performing the cell reselection in response to the terminal device being in the first specific state and the terminal device having not obtained the first system information includes: re-obtaining the first system information in response to the terminal device being in the first specific state, the terminal device initiating an RRC connection and the terminal device having not obtained the first system information; and in response to the first system information being not re-obtained within a predetermined duration, determining that the target cell is forbidden or performing the cell reselection.

In one embodiment of the present disclosure, the determining that the target cell is forbidden and/or performing the cell reselection in response to the terminal device being in the first specific state and the terminal device having not obtained the first system information includes: determining that the target cell is forbidden and/or performing the cell reselection in response to the terminal device being in the first specific state, and the terminal device having not obtained the first system information before the terminal device initiates an RRC connection recovery procedure or in a case that the terminal device initiates the RRC connection recovery procedure.

In one embodiment of the present disclosure, the determining that the target cell is forbidden and/or performing the cell reselection in response to the terminal device having not obtained the first system information includes: re-obtaining the first system information in response to the terminal device being in the first specific state and the terminal device having not obtained the first system information before the terminal device initiates a connection recovery procedure or in a case that the terminal device initiates a connection procedure; and in response to the first system information being not re-obtained within a predetermined duration, determining that the target cell is forbidden and/or performing the cell reselection.

In one embodiment of the present disclosure, the determining that the target cell is forbidden and/or performing the cell reselection in response to the terminal device being in the first specific state and the terminal device having not obtained the first system information includes: determining that the target cell is forbidden and/or performing the cell reselection in response to the terminal device being in the first specific state, an uplink synchronization validity timer associated with the first system information expired and the terminal device having not obtained the first system information.

For example, in one embodiment of the present disclosure, the determining that the target cell is forbidden and/or performing the cell reselection in response to the terminal device being in the first specific state and the terminal device having not obtained the first system information includes: determining that the target cell is forbidden and/or performing the cell reselection in response to the terminal device being in the first specific state, and the terminal device having not obtained the first system information within a predetermined duration after an uplink synchronization validity timer associated with the first system information expires.

For example, in one embodiment of the present disclosure, the method further includes at least one of: determining the predetermined duration based on an MIB or a SIB sent by a network side device, wherein the MIB carries a duration configuration, and the SIB carries the duration configuration; and determining the predetermined duration based on a system agreement.

For example, in one embodiment of the present disclosure, the method further includes: determining that the target cell is forbidden and/or performing the cell reselection in response to the terminal device being a NTN-capable terminal device and the terminal device having not obtained the first system information.

For example, in one embodiment of the present disclosure, the determining that the target cell is forbidden and/or performing the cell reselection in response to the terminal device being in the first specific state and the terminal device having not obtained the first system information includes: determining that the target cell is forbidden within a predetermined duration in response to the terminal device being in the first specific state and the terminal device having not obtained the first system information; and selecting or reselecting a cell at a same frequency as the target cell.

In one embodiment of the present disclosure, the determining that the target cell is forbidden within the predetermined duration in response to the terminal device being in the first specific state and the terminal device having not obtained the first system information includes: in response to a cell system message indicating that an intraFreq Reselection is allowed, determining that the target cell is forbidden within the predetermined duration in response to the terminal device being in the first specific state and the terminal device having not obtained the first system information.

Further, in one embodiment of the present disclosure, the determining that the target cell is forbidden within the predetermined duration in response to the terminal device having not obtained the first system information includes: in response to a cell system message indicating that an intraFreq Reselection is allowed or the cell system message indicating that the intraFreq Reselection is not allowed, determining that the target cell is forbidden within the predetermined duration in response to the terminal device being in the first specific state and the terminal device having not obtained the first system information.

For example, in one embodiment of the present disclosure, the determining that the target cell is forbidden and/or performing the cell reselection in response to the terminal device being in the first specific state and the terminal device having not obtained the first system information includes: determining that the target cell and other cells at a same frequency as the target cell are all forbidden and performing the cell reselection in response to the terminal device being in the first specific state and the terminal device having not obtained the first system information.

For example, in one embodiment of the present disclosure, the determining that the target cell and the other cells at the same frequency as the target cell are all forbidden and performing the cell reselection in response to the terminal device being in the first specific state and the terminal device having not obtained the first system information includes: in response to a cell system message indicating that an intraFreq Reselection is allowed, determining that the target cell and the other cells at the same frequency as the target cell are all forbidden and performing the cell reselection in response to the terminal device being in the first specific state and the terminal device having not obtained the first system information.

For example, in one embodiment of the present disclosure, the cell system message is an MIB.

For example, in one embodiment of the present disclosure, the terminal device being in the first specific state includes at least one of: the terminal device being in an idle state; the terminal device being in an inactive state; or the terminal device being in a connected state in a case that a timer T311 operates.

In a word, in the embodiments of the present disclosure, the terminal device determines that the target cell is forbidden and/or performs the cell reselection in response to the terminal device being in the first specific state and the terminal device having not obtained the first system information. In the embodiments of the present disclosure, in response to the first system information being not obtained, the terminal device determines that the target cell is forbidden, and/or performs the cell reselection. By determining that the target cell is forbidden, it is able to improve the determination accuracy of the forbidden target cell. In addition, with the cell reselection, it is able to establish the connection with the network side device, thereby to reduce the circumstances where the terminal device cannot establish the wireless connection with the network side device. With respect to wireless connection maintenance, the present disclosure provides a processing method, so as to enable the terminal device to perform the cell reselection to establish the wireless connection with the network side device in a case that it is impossible to obtain system information, thereby to ensure that the wireless connection is not interrupted, and improve the wireless communication stability.

FIG. 7 is a flow chart of a wireless connection maintenance method according to the embodiment of the present disclosure, and this method is executed by a terminal device. As shown in Fig. 7, the method includes the following steps.

Step 701: a target cell being forbidden is determined and/or a cell reselection is performed in response to the terminal device being in a first specific state, the terminal device initiating an RRC connection and the terminal device having not obtained first system information.

In one embodiment of the present disclosure, the terminal device being in the first specific state includes at least one of: the terminal device being in an idle state; the terminal device being in an inactive state; or the terminal device being in a connected state in a case that a timer T311 operates.

In one embodiment of the present disclosure, the first specific state does not specifically refer to a fixed state, and the word "first" is merely used to differentiate the first specific state from a second specific state. For example, in response to the terminal device being in the first specific state, the terminal device is in the idle state, in the inactive state, or in the connected state in a case that the timer T311 operates.

For example, in one embodiment of the present disclosure, the cell reselection is performed in response to the terminal device being in the idle state, the terminal device initiating the RRC connection and the terminal device having not obtained the first system information. For example, the terminal device determines that the target cell is forbidden or performs the cell reselection in response to the terminal device being in the idle state, the terminal device initiating the RRC connection and the terminal device having not obtained the first system information.

In one embodiment of the present disclosure, for example, the first system information is SIB19. For example, the terminal device performs the cell reselection in response to the terminal device being in the idle state, the terminal device initiating the RRC connection and the terminal device having not obtained SIB 19.

In a word, in the embodiments of the present disclosure, the terminal device determines that the target cell is forbidden and/or performs the cell reselection in response to the terminal device being in the first specific state, the terminal device initiating the RRC connection and the terminal device having not obtained the first system information. In the embodiments of the present disclosure, in response to the terminal device initiating the RRC connection and not obtaining the first system information, the terminal device determines that the target cell is forbidden, and/or performs the cell reselection, so as to establish the connection with the network side device, thereby to reduce the circumstances where the terminal device cannot establish the wireless connection with the network side device. As specifically disclosed in the embodiments of the present disclosure, the terminal device determines that the target cell is forbidden and/or performs the cell reselection in response to the terminal device initiating the RRC connection and having not obtained the first system, so as to improve the determination accuracy of the forbidden target cell as well as the cell reselection accuracy. With respect to wireless connection maintenance, the present disclosure provides a processing method, so as to enable the terminal device to perform the cell reselection to establish the wireless connection with the network side device in a case that it is impossible to obtain system information, thereby to ensure that the wireless connection is not interrupted, and improve the wireless communication stability.

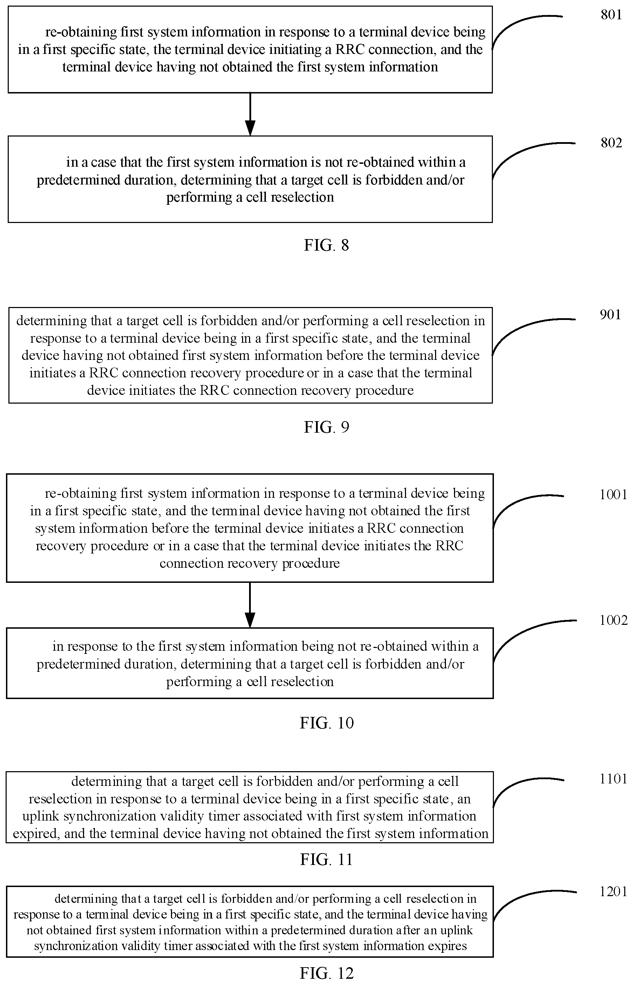

FIG. 8 is a flow chart of a wireless connection maintenance method according to the embodiment of the present disclosure, and this method is executed by a terminal device. As shown in FIG. 8, the method includes the following steps.

Step S801: first system information is re-obtained in response to the terminal device being in a first specific state, the terminal device initiating an RRC connection and the terminal device having not obtained first system information.

Step S802: in response to the first system information being not re-obtained within a predetermined duration, a target cell being forbidden is determined and/or a cell reselection is performed.

In one embodiment of the present disclosure, the terminal device determines the predetermined duration with at least one of the followings: determining the predetermined duration based on an MIB or a SIB sent by a network side device, wherein the MIB carries a duration configuration and the SIB carries the duration configuration; or determining the predetermined duration based on a system agreement.

For example, in one embodiment of the present disclosure, the terminal device receives the MIB sent by the network side device. The MIB carries the duration configuration, so the terminal device sets the predetermined duration based on the duration configuration. The predetermined duration does not specifically refer to a fixed duration. For example, in a case that a duration value corresponding to the predetermined duration changes, the predetermined duration changes correspondingly. For example, in a case that the duration configuration changes, the predetermined duration also changes correspondingly.

For example, in one embodiment of the present disclosure, the predetermined duration is in unit of, but not limited to, second, millisecond or minute. In the embodiments of the present disclosure, the predetermined duration refers to a duration within which the terminal device re-obtains the first system information in response to the terminal device initiating the RRC connection and the terminal device having not obtained the first system information.

In one embodiment of the present disclosure, the terminal device being in the first specific state includes at least one of: the terminal device being in an idle state; the terminal device being in an inactive state; or the terminal device being in a connected state in a case that a timer T311 operates.

For example, in one embodiment of the present disclosure, in response to the first system information being not re-obtained within the predetermined duration, the terminal device performs the cell reselection, e.g., the terminal device determines that the target cell is forbidden, and performs the cell reselection to the other cell.

For example, in one embodiment of the present disclosure, the first system information is SIB 19. For example, in response to SIB 19 being not re-obtained within the predetermined duration, the terminal device performs the cell reselection, e.g., the terminal device determines that the target cell is forbidden, and performs the cell reselection to the other cell.

In a word, in the embodiments of the present disclosure, the terminal device re-obtains the first system information in response to the terminal device being in the first specific state, the terminal device initiating the RRC connection and the terminal device having not obtained the first system information. In response to the first system information being not re-obtained within the predetermined duration, the terminal device determines that the target cell is forbidden, and/or performs the cell reselection. In the embodiments of the present disclosure, in response to the terminal device initiating the RRC connection and not obtaining the first system information, the terminal device re-obtains the first system, and in response to the first system information being not obtained within the predetermined duration, the terminal device determines that the target cell is forbidden and/or performs the cell reselection. By determining that the target cell is forbidden, it is able to improve the determination accuracy of the forbidden target cell. In addition, with the cell reselection, it is able to establish the connection with the network side device, thereby to reduce the circumstances where the terminal device cannot establish the wireless connection with the network side device. As specifically disclosed in the embodiments of the present disclosure, the terminal device performs the cell reselection in response to the terminal device initiating the RRC connection and not re-obtaining the first system within the predetermined duration, so as to improve the cell reselection accuracy. With respect to wireless connection maintenance, the present disclosure provides a processing method, so as to enable the terminal device to perform the cell reselection to establish the wireless connection with the network side device in a case that it is impossible to obtain system information, thereby to ensure that the wireless connection is not interrupted, and improve the wireless communication stability.

FIG. 9 is a flow chart of a wireless connection maintenance method according to the embodiment of the present disclosure, and this method is executed by a terminal device. As shown in FIG. 9, this method includes the following step.

Step 901: a target cell being forbidden is determined and/or cell reflection is performed in response to the terminal device being in a first specific state and the terminal device having not obtained first system information before the terminal device initiates an RRC connection recovery procedure or in a case that the terminal device initiates the RRC connection recovery procedure.

**In** one embodiment of the present disclosure, the terminal device being in the first specific state includes at least one of: the terminal device being in an idle state; the terminal device being in an inactive state; or the terminal device being in a connected state in a case that a timer T311 operates.

For example, in one embodiment of the present disclosure, the terminal device performs the cell reselection in response to the terminal device being in the inactive state and the terminal device having not obtained the first system information before the terminal device initiates the RRC recovery procedure or in a case that the terminal device initiates the RRC connection recovery procedure. For example, in response to the terminal device not obtaining the first system information, the terminal device determines that the target cell is forbidden, and performs the cell reselection to the other cell.

For example, in one embodiment of the present disclosure, the first system information is SIB19. For example, the terminal device performs the cell reselection in response to the terminal device being in the inactive state and the terminal device having not obtained SIB19 before the terminal device initiates the RRC connection recovery procedure or in a case that the terminal device initiates the RRC connection recovery procedure.

In a word, in the embodiments of the present disclosure, the terminal device determines that the target cell is forbidden and/or performs the cell reselection in response to the terminal device being in the first specific state and the terminal device having not obtained the first system information before the terminal device initiates the RRC connection recovery procedure or in a case that the terminal device initiates the RRC connection recovery procedure. In the embodiments of the present disclosure, the terminal device determines that the target cell is forbidden and/or performs the cell reselection in response to the terminal device having not obtained the first system information before the terminal device initiates the RRC connection recovery procedure or in a case that the terminal device initiates the RRC connection recovery procedure. By determining that the target cell is forbidden, it is able to improve the determination accuracy of the forbidden target cell. In addition, with the cell reselection, it is able to establish the connection with the network side device, thereby to reduce the circumstances where the terminal device cannot establish the wireless connection with the network side device. As specifically disclosed in the embodiments of the present disclosure, the terminal device performs the cell reselection in response to the terminal device initiating the RRC connection and not re-obtaining the first system within the predetermined duration, so as to improve the cell reselection accuracy. With respect to wireless connection maintenance, the present disclosure provides a processing method, so as to enable the terminal device to perform the cell reselection to establish the wireless connection with the network side device in a case that it is impossible to obtain system information, thereby to ensure that the wireless connection is not interrupted, and improve the wireless communication stability.

FIG. 10 is a flow chart of a wireless connection maintenance method according to the embodiment of the present disclosure, and this method is executed by a terminal device. As shown in FIG. 10, this method includes the following steps.

Step 1001: first system information is re-obtained in response to the terminal device being in a first specific state and the terminal device having not obtained the first system information before the terminal device initiates an RRC connection recovery procedure or in a case that the terminal device initiates a connection procedure.

Step 1002: in response to the first system information being not re-obtained within a predetermined duration, a target cell being forbidden is determined and/or a cell reselection is performed.

In one embodiment of the present disclosure, the terminal device obtains the predetermined duration with at least one of the followings: determining the predetermined duration based on an MIB or a SIB sent by a network side device, wherein the MIB carries a duration configuration, and the SIB carries the duration configuration; or determining the predetermined duration based on a system agreement.

For example, in one embodiment of the present disclosure, the terminal device receives the SIB sent by the network side device. The SIB carries the duration configuration, so the terminal device sets the predetermined duration based on the duration configuration. The predetermined duration does not specifically refer to a fixed duration. For example, in a case that a duration value corresponding to the predetermined duration changes, the predetermined duration changes correspondingly. For example, in a case that the duration configuration changes, the predetermined duration also changes correspondingly.

For example, in one embodiment of the present disclosure, the predetermined duration is in unit of, but not limited to, second, millisecond or minute. In the embodiments of the present disclosure, the predetermined duration refers to a duration within which the terminal device re-obtains the first system information in response to the terminal device having not obtained the first system information before the terminal device initiates the RRC connection recover procedure or in a case that the terminal device initiates a connection procedure. The predetermined duration may also be the same as, or different from, a predetermined duration within which the terminal device re-obtains the first system information in response to the terminal device initiating the RRC connection and the terminal device having not obtained the first system information.

In one embodiment of the present disclosure, the terminal device being in the first specific state includes at least one of: the terminal device being in an idle state; the terminal device being in an inactive state; or the terminal device being in a connected state in a case that a timer T311 operates.

For example, in one embodiment of the present disclosure, in a case that the first system information is not re-obtained within the predetermined duration, the terminal device determines that the target cell is forbidden, and performs the cell reselection to the other cell.

For example, in one embodiment of the present disclosure, the first system information is SIB19. In response to SIB19 being not re-obtained within the predetermined duration, the terminal device determines that the target cell is forbidden, and performs the cell reselection to the other cell.

In a word, in the embodiments of the present disclosure, the terminal device re-obtains the first system information in response to the terminal device being in the first specific and the terminal device having not obtained the first system information before the terminal device initiates the RRC connection recovery procedure or in a case that the terminal device initiates the RRC connection recovery procedure. In response to the first system information being not re-obtained within the predetermined duration, the terminal device determines that the target cell is forbidden and/or performs the cell reselection. In the embodiments of the present disclosure, the terminal device does not obtain the first system information before the terminal device initiates the RRC connection recovery procedure or in a case that the terminal device initiates the RRC connection recovery procedure, and in response to the first system information being not re-obtained within the predetermined duration, the terminal device determines that the target cell is forbidden and/or performs the cell reselection. By determining that the target cell is forbidden, it is able to improve the determination accuracy of the forbidden target cell. In addition, with the cell reselection, it is able to establish the connection with the network side device, thereby to reduce the circumstances where the terminal device cannot establish the wireless connection with the network side device. As specifically disclosed in the embodiments of the present disclosure, before the terminal device initiates the RRC connection recovery procedure or in a case that the terminal device initiates the RRC connection recovery procedure, the terminal device does not re-obtain the first system information within the predetermined duration, so the terminal device performs the cell reselection, so as to improve the cell reselection accuracy. With respect to wireless connection maintenance, the present disclosure provides a processing method, so as to enable the terminal device to perform the cell reselection to establish the wireless connection with the network side device in a case that it is impossible to obtain system information, thereby to ensure that the wireless connection is not interrupted, and improve the wireless communication stability.

FIG. 11 is a flow chart of a wireless connection maintenance method according to the embodiment of the present disclosure, and this method is executed by a terminal device. As shown in FIG. 11, the method includes the following step.

Step 1101: a target cell being forbidden is determined and/or a cell reselection is performed in response to the terminal being in a first specific state, an uplink synchronization validity timer associated with first system information expired, and the terminal device having not obtained the first system information.

In one embodiment of the present disclosure, the terminal device being in the first specific state includes at least one of: the terminal device being in an idle state; the terminal device being in an inactive state; or the terminal device being in a connected state in a case that a timer T311 operates.

For example, in one embodiment of the present disclosure, the terminal device performs the cell reselection in response to the terminal device being in the idle state, the uplink synchronization validity timer associated with the first system information expired and the terminal device having not obtained the first system information. Alternatively, the terminal device performs the cell reselection in response to the terminal device being in the idle state, NTN uplink synchronization validation duration associated with the first system being exceeded, and the terminal device having not obtained the first system information. For example, in response to the terminal device not obtaining the first system information, the terminal device determines that the target cell is forbidden, and performs the cell reselection to the other cell.

For example, in one embodiment of the present disclosure, the first system information is SIB19. For example, the terminal device performs the cell reselection in response to the terminal device being in the idle state, the validity timer associated with SIB19 expired and the terminal device not obtain the SIB 19.

In a word, in the embodiments of the present disclosure, the terminal device determines that the target cell is forbidden and/or performs the cell reselection in response to the terminal device being in the first specific state, the uplink synchronization validation timer associated with the first system information expired and the terminal device having not obtained the first system information. In the embodiments of the present disclosure, in a case that the uplink synchronization validity timer associated with the first system information expires and the terminal device does not obtain the first system information, the terminal device determines that the target cell is forbidden and/or performs the cell reselection. By determining that the target cell is forbidden, it is able to improve the determination accuracy of the forbidden target cell. In addition, with the cell reselection, it is able to establish the connection with the network side device, thereby to reduce the circumstances where the terminal device cannot establish the wireless connection with the network side device. With respect to wireless connection maintenance, the present disclosure provides a processing method, so as to enable the terminal device to perform the cell reselection to establish the wireless connection with the network side device in a case that it is impossible to obtain system information, thereby to ensure that the wireless connection is not interrupted, and improve the wireless communication stability.

FIG. 12 is a flow chart of a wireless connection maintenance method according to the embodiment of the present disclosure, and this method is executed by a terminal device. As shown in FIG. 12, the method includes the following step.

Step 1201: a target cell being forbidden is determined and/or a cell reselection is performed in response to the terminal device being in a first specific state, and the terminal device having not obtained first system information within a predetermined duration after an uplink synchronization validity timer associated with the first system information expires.

In one embodiment of the present disclosure, the terminal device determines the predetermined duration with at least one of the followings: determining the predetermined duration based on an MIB or a SIB sent by a network side device, wherein the MIB carries a duration configuration, and the SIB carries the duration configuration; or determining the predetermined duration based on a system agreement.

For example, in one embodiment of the present disclosure, the terminal device obtains the predetermined duration with at least one of the followings: determining the predetermined duration based on an MIB or a SIB sent by a network side device, wherein the MIB carries a duration configuration, and the SIB carries the duration configuration; or determining the predetermined duration based on a system agreement.

For example, in one embodiment of the present disclosure, the terminal device receives the SIB sent by the network side device. The SIB carries the duration configuration, so the terminal device sets the predetermined duration based on the duration configuration. The predetermined duration does not specifically refer to a fixed duration. For example, in a case that a duration value corresponding to the predetermined duration changes, the predetermined duration changes correspondingly. For example, in a case that the duration configuration changes, the predetermined duration also changes correspondingly.

For example, in one embodiment of the present disclosure, the predetermined duration is in unit of, but not limited to, second, millisecond or minute. In the embodiments of the present disclosure, the predetermined duration refers to a duration within which the terminal device re-obtains the first system information in response to the terminal device having not obtained the first system information after the uplink synchronization validity timer associated with the first system information expires.

In one embodiment of the present disclosure, the terminal device being in the first specific state includes at least one of: the terminal device being in an idle state; the terminal device being in an inactive state; or the terminal device being in a connected state in a case that a timer T311 operates.

For example, in one embodiment of the present disclosure, the terminal device performs the cell reselection in response to the terminal device being in the idle state, and the terminal device having not obtained the first system information within the predetermined duration after the uplink synchronization validity timer associated with the first system information expires. Alternatively, the terminal device performs the cell reselection in response to the terminal device being in the idle state, and the terminal device having not obtained the first system information after NTN uplink synchronization validation duration associated with the first system is exceeded. For example, in response to the terminal device not obtaining the first system information within the predetermined duration, the terminal device determines that the target cell is forbidden, and performs the cell reselection to the other cell.

For example, in one embodiment of the present disclosure, the first system information is SIB 19. For example, in response to SIB 19 being not re-obtained within the predetermined duration, the terminal device performs the cell reselection in response to the terminal device being in the idle state and the validity timer associated with SIB 19 expired.

In a word, in the embodiments of the present disclosure, the terminal device determines that the target cell is forbidden and/or performs the cell reselection in response to the terminal device being in the first specific state, and the terminal device having not obtained the first system information within the predetermined duration after the uplink synchronization validation timer associated with the first system information expires. In the embodiments of the present disclosure, after the uplink synchronization validity timer associated with the first system information expires, in response to the terminal device not obtaining the first system information within the predetermined duration, the terminal device determines that the target cell is forbidden and/or performs the cell reselection. By determining that the target cell is forbidden, it is able to improve the determination accuracy of the forbidden target cell. In addition, with the cell reselection, it is able to establish the connection with the network side device, thereby to reduce the circumstances where the terminal device cannot establish the wireless connection with the network side device. With respect to wireless connection maintenance, the present disclosure provides a processing method, so as to enable the terminal device to perform the cell reselection to establish the wireless connection with the network side device in a case that it is impossible to obtain system information, thereby to ensure that the wireless connection is not interrupted, and improve the wireless communication stability.

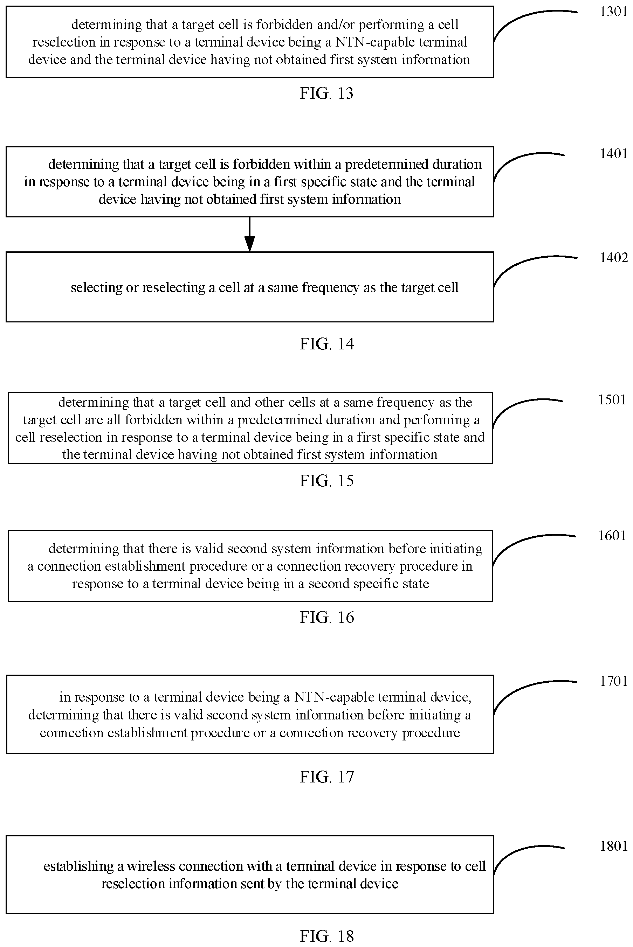

FIG. 13 is a flow chart of a wireless connection maintenance method according to the embodiment of the present disclosure, and this method is executed by a terminal device. As shown in FIG. 13, the method includes the following step.

Step 1301: a target cell being forbidden is determined and/or a cell reselection is performed in response to the terminal device being a NTN-capable terminal device and the terminal device having not obtained the first system information.

For example, in one embodiment of the present disclosure, the terminal device performs the cell reselection in response to the terminal device being the NTN-capable terminal device and the terminal device having not obtained the first system information. In other words, in response to the terminal device not obtaining the first system information, the terminal device determines that the target cell is forbidden, and performs the cell reselection to the other cell.

For example, in one embodiment of the present disclosure, the first system information is SIB19. For example, the terminal device performs the cell reselection in response to the terminal device being the NTN-capable terminal device and the terminal device having not obtained SIB 19.

In a word, in the embodiments of the present disclosure, the terminal device determines that the target cell being forbidden and/or performs the cell reselection in response to the terminal device being the NTN-capable terminal device and the terminal device having not obtained the first system information. In the embodiments of the present disclosure, in response to the terminal device being the NTN-capable terminal device and the terminal device not obtaining the first system information, the terminal device determines that the target cell is forbidden and/or performs the cell reselection. By determining that the target cell is forbidden, it is able to improve the determination accuracy of the forbidden target cell. In addition, with the cell reselection, it is able to establish the connection with the network side device, thereby to reduce the circumstances where the terminal device cannot establish the wireless connection with the network side device. With respect to wireless connection maintenance, the present disclosure provides a processing method, so as to enable the terminal device to perform the cell reselection to establish the wireless connection with the network side device in a case that it is impossible to obtain system information, thereby to ensure that the wireless connection is not interrupted, and improve the wireless communication stability.

FIG. 14 is a flow chart of a wireless connection maintenance method according to the embodiment of the present disclosure, and this method is executed by a terminal device. As shown in FIG. 14, this method includes the following steps.

Step 1401: a target cell being forbidden within a predetermined duration is determined in response to the terminal device being in a first specific state and the terminal device having not obtained first system information.

Step 1402: selection or reselection to other cell at a same frequency as the target cell is performed.

In one embodiment of the present disclosure, the determining that the target cell is forbidden within the predetermined duration in response to the terminal device being in the first specific state and the terminal device having not obtained the first system information includes: in response to a cell system message indicating that an intraFreq Reselection is allowed, determining that the target cell is forbidden within the predetermined duration in response to the terminal device being in the first specific state and the terminal device having not obtained the first system information.

For example, in one embodiment of the present disclosure, the determining that the target cell is forbidden within the predetermined duration in response to the terminal device having not obtained the first system information includes: in response to a cell system message indicating that an intraFreq Reselection is allowed or the cell system message indicating that the intraFreq Reselection is not allowed, determining that the target cell is forbidden within the predetermined duration in response to the terminal device being in the first specific state and the terminal device having not obtained the first system information.

For example, in one embodiment of the present disclosure, the cell system message is an MIB.

In one embodiment of the present disclosure, the terminal device being in the first specific state includes at least one of: the terminal device being in an idle state; the terminal device being in an inactive state; or the terminal device being in a connected state in a case that a timer T311 operates.

For example, in one embodiment of the present disclosure, the terminal device obtains the predetermined duration with at least one of the followings: determining the predetermined duration based on an MIB or a SIB sent by a network side device, wherein the MIB carries a duration configuration, and the SIB carries the duration configuration; or determining the predetermined duration based on a system agreement.

For example, in one embodiment of the present disclosure, the first system information is SIB19, and the predetermined duration is 300s. The terminal device determines that the target cell is forbidden within 300s and performs the selection or reselection to the other cell at a same frequency as the target cell in response to the terminal device being in the first specific state and the terminal device having not obtained SIB 19.

In a word, in the embodiments of the present disclosure, the terminal device determines that the target cell is forbidden within the predetermined duration in response to the terminal device being in the first specific state and the terminal device having not obtained the first system information, and performs the selection or reselection to the other cell at a same frequency as the target cell. In the embodiments of the present disclosure, in response to the terminal device determining that the target cell is forbidden within the predetermined duration, the terminal device performs the selection or reselection to the other cell at the same frequency as the target cell, specifically the other cell available for the terminal device, so as to establish the connection with the network side device, thereby to reduce the circumstances where the terminal device cannot establish the wireless connection with the network side device. With respect to wireless connection maintenance, the present disclosure provides a processing method, so as to enable the terminal device to perform the cell reselection to establish the wireless connection with the network side device in a case that it is impossible to obtain system information, thereby to ensure that the wireless connection is not interrupted, and improve the wireless communication stability.

FIG**.** 15 is a flow chart of a wireless connection maintenance method according to the embodiment of the present disclosure, and this method is executed by a terminal device. As shown in FIG. 15, this method includes the following step.

Step 1501: a target cell and other target cells at a same frequency as the target cell all being forbidden within a predetermined duration is determined, and cell reselection is performed in response to the terminal device being in a first specific state and the terminal device having not obtained first system information.

**In** one embodiment of the present disclosure, the determining that the target cell and the other cells at a same frequency as the target cell are all forbidden and performing the cell reselection in response to the terminal device being in the first specific state and the terminal device having not obtained the first system information includes: in response to a cell system message indicating that an intraFreq Reselection is allowed, determining that the target cell and the other cells at a same frequency as the target cell are all forbidden and performing the cell reselection in response to the terminal device being in the first specific state and the terminal device having not obtained the first system information.

For example, in one embodiment of the present disclosure, the cell system message is an MIB.

**In** one embodiment of the present disclosure, the terminal device being in the first specific state includes at least one of: the terminal device being in an idle state; the terminal device being in an inactive state; or the terminal device being in a connected state in a case that a timer T311 operates.

For example, in one embodiment of the present disclosure, the first system information is SIB19, and the predetermined duration is 300s. The terminal device determines that the target cell and the other cells at the same frequency as the target cell are all forbidden within 300s in response to the terminal device being in the first specific state and the terminal device having not obtained the SIB 19, and performs the cell reselection. In other words, the terminal device cannot reselect the target cell and the other cells at the same frequency as the target cell within 300s.

**In** a word, in the embodiments of the present disclosure, the terminal device determines that the target cell and the other cells at the same frequency as the target cell are all forbidden within the predetermined duration in response to the terminal device being in the first specific state and the terminal device having not obtained the first system information, and performs the cell reselection. In the embodiments of the present disclosure, in response to the terminal device determining that the target cell and the other cells at the same frequency as the target cell are all forbidden within the predetermined duration, the terminal device performs the cell reselection based on the forbidden cells, so as to establish the connection with the network side device, reduce an establishment duration of the wireless connection, and reduce the circumstances where the terminal device cannot establish the wireless connection with the network side device. With respect to wireless connection maintenance, the present disclosure provides a processing method, so as to enable the terminal device to perform the cell reselection to establish the wireless connection with the network side device in a case that it is impossible to obtain system information, thereby to ensure that the wireless connection is not interrupted, and improve the wireless communication stability.

FIG. 16 is a flow chart of a wireless connection maintenance method according to the embodiment of the present disclosure, and this method is executed by a terminal device. As shown in FIG. 16, this method includes the following step.

Step 1601: there existing valid second system information is determined before initiating a connection establishment procedure or a connection recovery procedure in response to the terminal device being in a second specific state.

**In** one embodiment of the present disclosure, the determining that there is the valid second system information before initiating the connection establishment procedure or the connection recovery procedure includes: in response to the terminal device being a NTN-capable terminal device, determining that there is the valid second system information before initiating the connection establishment procedure or the connection recovery procedure.

In one embodiment of the present disclosure, the terminal device being in the second specific state includes at least one of: the terminal device being in an idle state; or the terminal device being in an inactive state.

For example, the word "second" is merely used to differentiate the second specific state from a first specific state, and the second specific state does not specifically refer to a fixed state. For example, in response to the terminal device being in the second specific state, the terminal device is in the idle state or in the inactive state.

For example, in one embodiment of the present disclosure, the word "second" is merely used to differentiate the second system information from first system information, and the second system information does not specifically refer to fixed system information. For example, the second system information is SIB 19. The valid second system information is a broadcast signal. The valid second system information refers to information used by the terminal device for determining that there is a base station for initiating the connection establishment procedure or the connection recovery procedure.

In a word, in the embodiments of the present disclosure, before initiating the connection establishment procedure or the connection recovery procedure, the terminal device determines that there is the valid second system information in response to the terminal device being in the second specific state. In the embodiments of the present disclosure, before the terminal device initiates the connection establishment procedure or the connection recovery procedure, the terminal device determines that there is the valid second system information in response to the terminal device being in the second specific state, so as to establish the connection with the network side device, thereby to reduce the circumstances where the terminal device cannot establish the wireless connection with the network side device, and increase a success rate of the wireless connection establishment. With respect to wireless connection maintenance, the present disclosure provides a processing method, so as to enable the terminal device to perform the cell reselection to establish the wireless connection with the network side device in a case that it is impossible to obtain system information, thereby to ensure that the wireless connection is not interrupted, and improve the wireless communication stability.

FIG. 17 is a flow chart of a wireless connection maintenance method according to the embodiment of the present disclosure, and this method is executed by a terminal device. As shown in FIG. 17, this method includes the following step.

Step 1701: there existing valid second system information is determined before initiating a connection establishment procedure or a connection recovery procedure in response to the terminal device being a NTN-capable terminal device.

In a word, in the embodiments of the present disclosure, in response to the terminal device being a NTN-capable terminal device, the terminal device determines that there is the valid second system information before initiating the connection establishment procedure or the connection recovery procedure. In the embodiments of the present disclosure, before the terminal device initiates the connection establishment procedure or the connection recovery procedure, the terminal device determines that there is the valid second system information is the NTN-capable terminal device, so as to establish the connection with the network side device, thereby to reduce the circumstances where the terminal device cannot establish the wireless connection with the network side device, and increase a success rate of the wireless connection establishment. With respect to wireless connection maintenance, the present disclosure provides a processing method, so as to enable the terminal device to perform the cell reselection to establish the wireless connection with the network side device in a case that it is impossible to obtain system information, thereby to ensure that the wireless connection is not interrupted, and improve the wireless communication stability.

FIG. 18 is a flow chart of a wireless connection maintenance method according to the embodiment of the present disclosure, and this method is executed by a network side device. As shown in FIG. 18, this method includes the following step.

Step 1801: a wireless connection is established with a terminal device in response to cell reselection information sent by the terminal device.

In one embodiment of the present disclosure, the network side device sends an MIB or a SIB to the terminal device. The MIB carries a duration configuration, and the SIB carries the duration configuration.

For example, in one embodiment of the present disclosure, the network side device sends the MIB to the terminal device, and the MIB carries the duration configuration. Upon the receipt of the MIB, the terminal device determines a predetermined duration based on the duration configuration.

In a word, in the embodiments of the present disclosure, the wireless connection is established with the terminal device in response to the cell reselection information sent by the terminal device. In the embodiments of the present disclosure, the network side device establishes the wireless connection with the terminal device based on the cell reselection information, so as to reduce the circumstances where the network side device cannot establish the wireless connection with the terminal device in a case that the terminal device cannot obtain the first system information. With respect to wireless connection maintenance, the present disclosure provides a processing method, so as to enable the terminal device to perform the cell reselection to establish the wireless connection with the network side device in a case that it is impossible to obtain system information, thereby to ensure that the wireless connection is not interrupted, and improve the wireless communication stability.

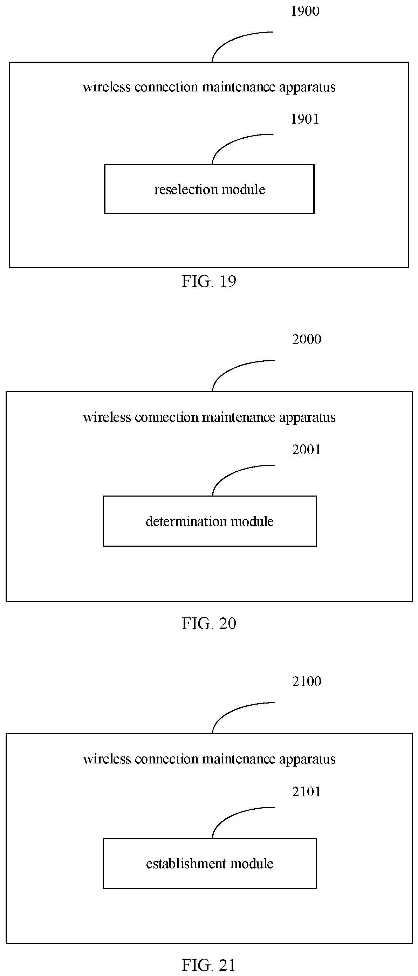

FIG. 19 is a schematic view showing a wireless connection maintenance apparatus according to the embodiment of the present disclosure. As shown in FIG. 19, the apparatus 1900 includes: a reselection module 1901 configured to determine that a target cell is forbidden and/or perform cell reselection in response to a terminal device being in a first specific state and the terminal device having not obtained first system information.

In a word, according to the wireless connection maintenance apparatus in the embodiments of the present disclosure, the reselection module is configured to determine that the target cell is forbidden and/or perform the cell reselection in response to the terminal device being in the first specific state and the terminal device having not obtained the first system information. In the embodiments of the present disclosure, in response to the first system information being not obtained, the wireless connection maintenance apparatus determines that the target cell is forbidden and/or performs the cell reselection. By determining that the target cell is forbidden, it is able to improve the determination accuracy of the forbidden target cell. In addition, with the cell reselection, it is able to establish the connection with the network side device, thereby to reduce the circumstances where the terminal device cannot establish the wireless connection with the network side device. With respect to wireless connection maintenance, the present disclosure provides a processing method, so as to enable the wireless connection maintenance apparatus to perform the cell reselection to establish the wireless connection with the network side device in a case that it is impossible to obtain system information, thereby to ensure that the wireless connection is not interrupted, and improve the wireless communication stability.

Optionally, in one embodiment of the present disclosure, in a case that the reselection module 1901 is configured to determine that the target cell is forbidden and/or perform the cell reselection in response to the terminal device being in the first specific state and the terminal device having not obtained the first system information, the reselection module 1901 is specifically configured to determine that the target cell is forbidden and/or perform the cell reselection in response to the terminal device being in the first specific state, the terminal device initiating an RRC connection and the terminal device having not obtained the first system information.

Optionally, in one embodiment of the present disclosure, in a case that the reselection module 1901 determines that the target cell is forbidden and/or performs the cell reselection in response to the terminal device being in the first specific state and the terminal device having not obtained the first system information, the reselection module 1901 is specifically configured to: re-obtain the first system information in response to the terminal device being in the first specific state, the terminal device initiating an RRC connection and the terminal device having not obtained the first system information; and in response to the first system information being not re-obtained within a predetermined duration, determine that the target cell is forbidden or perform the cell reselection.

Optionally, in one embodiment of the present disclosure, in a case that the reselection module 1901 determines that the target cell is forbidden and/or performs the cell reselection in response to the terminal device being in the first specific state and the terminal device having not obtained the first system information, the reselection module 1901 is specifically configured to: determine that the target cell is forbidden and/or perform the cell reselection in response to the terminal device being in the first specific state, and the terminal device having not obtained the first system information before the terminal device initiates an RRC connection recovery procedure or in a case that the terminal device initiates the RRC connection recovery procedure.

Optionally, in one embodiment of the present disclosure, in a case that the reselection module 1901 determines that the target cell is forbidden and/or performs the cell reselection in response to the terminal device having not obtained the first system information, the reselection module 1901 is specifically configured to: re-obtain the first system information in response to the terminal device being in the first specific state and the terminal device having not obtained the first system information before the terminal device initiates a connection recovery procedure or in response to the terminal device initiating a connection procedure; and in response to the first system information being not re-obtained within a predetermined duration, determine that the target cell is forbidden and/or perform the cell reselection.

Optionally, in one embodiment of the present disclosure, in a case that the reselection module 1901 determines that the target cell is forbidden and/or performs the cell reselection in response to the terminal device being in the first specific state and the terminal device having not obtained the first system information, the reselection module 1901 is specifically configured to: determine that the target cell is forbidden and/or perform the cell reselection in response to the terminal device being in the first specific state, an uplink synchronization validity timer associated with the first system information expired and the terminal device having not obtained the first system information.

Optionally, in one embodiment of the present disclosure, in a case that the reselection module 1901 determines that the target cell is forbidden and/or performs the cell reselection in response to the terminal device being in the first specific state and the terminal device having not obtained the first system information, the reselection module 1901 is specifically configured to: determine that the target cell is forbidden and/or performs the cell reselection in response to the terminal device being in the first specific state, and the terminal device having not obtained the first system information within a predetermined duration after an uplink synchronization validity timer associated with the first system information expires.

Optionally, in one embodiment of the present disclosure, the reselection module 1901 is further configured to perform at least one of: determining the predetermined duration based on an MIB or a SIB sent by a network side device, wherein the MIB carries a duration configuration, and the SIB carries the duration configuration; and determine the predetermined duration based on a system agreement.

Optionally, in one embodiment of the present disclosure, the reselection module 1901 is further configured to determine that the target cell is forbidden and/or perform the cell reselection in response to the terminal device being a NTN-capable terminal device and the terminal device having not obtained the first system information.

Optionally, in one embodiment of the present disclosure, in a case that the reselection module 1901 determines that the target cell is forbidden and/or performs the cell reselection in response to the terminal device being in the first specific state and the terminal device having not obtained the first system information, the reselection module 1901 is specifically configured to: determine that the target cell is forbidden within a predetermined duration in response to the terminal device being in the first specific state and the terminal device having not obtained the first system information; and select or reselect a cell at a same frequency as the target cell.

Optionally, in one embodiment of the present disclosure, in a case that the reselection module 1901 determines that the target cell is forbidden within the predetermined duration in response to the terminal device being in the first specific state and the terminal device having not obtained the first system information, the reselection module 1902 is specifically configured to: in response to a cell system message indicating that an intraFreq Reselection is allowed, determine that the target cell is forbidden within the predetermined duration in response to the terminal device being in the first specific state and the terminal device having not obtained the first system information.

Optionally, in one embodiment of the present disclosure, in a case that the reselection module 1901 determines that the target cell is forbidden within the predetermined duration in response to the terminal device having not obtained the first system information, the reselection module 1901 is specifically configured to: in response to a cell system message indicating that an intraFreq Reselection is allowed or the cell system message indicating that the intraFreq Reselection is not allowed, determine that the target cell is forbidden within the predetermined duration in response to the terminal device being in the first specific state and the terminal device having not obtained the first system information.

Optionally, in one embodiment of the present disclosure, in a case that the reselection module 1901 determines that the target cell is forbidden and/or performs the cell reselection in response to the terminal device being in the first specific state and the terminal device having not obtained the first system information, the reselection module 1901 is specifically configured to: determine that the target cell and other cells at a same frequency as the target cell are all forbidden and perform the cell reselection in response to the terminal device being in the first specific state and the terminal device having not obtained the first system information.

Optionally, in one embodiment of the present disclosure, in a case that the reselection module 1901 determines that the target cell and the other cells at a same frequency as the target cell are all forbidden and performs the cell reselection in response to the terminal device being in the first specific state and the terminal device having not obtained the first system information, the reselection module 1901 is specifically configured to: in response to a cell system message indicating that an intraFreq Reselection is allowed, determine that the target cell and the other cells at a same frequency as the target cell are all forbidden and perform the cell reselection in response to the terminal device being in the first specific state and the terminal device having not obtained the first system information.

Optionally, in one embodiment of the present disclosure, the cell system message is an MIB.

Optionally, in one embodiment of the present disclosure, the terminal device being in the first specific state includes at least one of: the terminal device being in an idle state; the terminal device being in an inactive state; or the terminal device being in a connected state in a case that a timer T311 operates.

FIG. 20 is a schematic view showing a wireless connection maintenance apparatus according to the embodiment of the present disclosure. As shown in FIG. 20, the apparatus 200 includes a determination module 2001 configured to determine that there is valid second system information before initiating a connection establishment procedure or a connection recovery procedure in response to a terminal device being in a second specific state.

In a word, according to the wireless connection maintenance apparatus in the embodiments of the present disclosure, the determination module determines that there is the valid second system information before initiating the connection establishment procedure or the connection recovery procedure in response to the terminal device being in the second specific state. In the embodiments of the present disclosure, before initiating the connection establishment procedure or the connection recovery procedure, the wireless connection maintenance apparatus determines that there is the valid second system information in response to the terminal device being in the second specific state, so as to establish the connection with the network side device, thereby to reduce the circumstances where the terminal device cannot establish the wireless connection with the network side device, and increase a success rate of the wireless connection establishment. With respect to wireless connection maintenance, the present disclosure provides a processing method, so as to enable the wireless connection maintenance apparatus to perform the cell reselection to establish the wireless connection with the network side device in a case that it is impossible to obtain system information, thereby to ensure that the wireless connection is not interrupted, and improve the wireless communication stability.

Optionally, in one embodiment of the present disclosure, in a case that the determination module 2001 determines that there is the valid second system information before initiating the connection establishment procedure or the connection recovery procedure, the determination module 2001 is specifically configured to, in response to the terminal device being a NTN-capable terminal device, determine that there is the valid second system information before initiating the connection establishment procedure or the connection recovery procedure.

Optionally, in one embodiment of the present disclosure, the terminal device being in the second specific state includes at least one of: the terminal device being in an idle state; or the terminal device being in an inactive state.

FIG. 21 is a schematic view showing a wireless connection maintenance apparatus according to the embodiment of the present disclosure. As shown in FIG. 21, the apparatus 2100 includes an establishment module 2101 configured to establish a wireless connection with a terminal device in response to cell reselection information sent by the terminal device.

In a word, according to the wireless connection maintenance apparatus in the embodiments of the present disclosure, the establishment module establishes the wireless connection with the terminal device in response to the cell reselection information sent by the terminal device. In the embodiments of the present disclosure, the wireless connection maintenance apparatus establishes the wireless connection with the terminal device based on the cell reselection information, so as to reduce the circumstances where the terminal device cannot establish the wireless connection with the network side device in a case that the terminal device cannot obtain the first system information. With respect to wireless connection maintenance, the present disclosure provides a processing method, so as to enable the terminal device to perform the cell reselection to establish the wireless connection with the network side device in a case that it is impossible to obtain system information, thereby to ensure that the wireless connection is not interrupted, and improve the wireless communication stability.

Optionally, in one embodiment of the present disclosure, the establishment module 2101 is further configured to send an MIB or a SIB to the terminal device. The MIB carries a duration configuration, and the SIB carries the duration configuration.

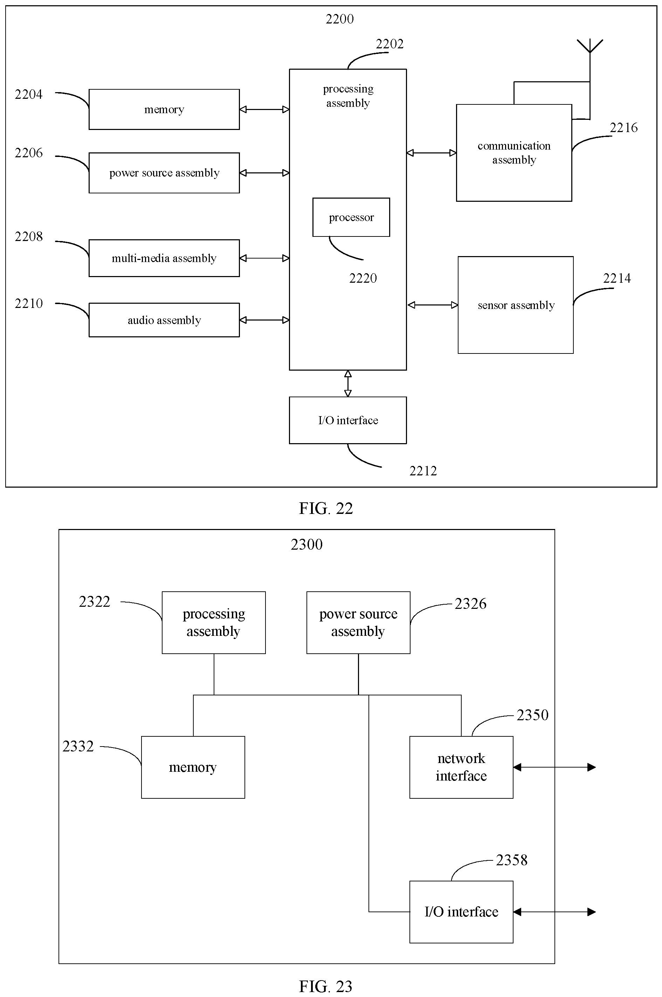

FIG. 22 is a block diagram of a terminal device 2200 according to the embodiment of the present disclosure. For example, the terminal device 2200 is a mobile phone, a computer, a digital broadcasting terminal device, a message transceiver device, a game console, a flat-panel device, medical equipment, fitness equipment, or a personal digital assistant.

As shown in FIG. 22, the terminal device 2200 includes at least one assembly selected from the group consisting of a processing assembly 2202, a memory 2204, a power source assembly 2206, a multi-media assembly 2208, an audio assembly 2210, an Input/Output (I/O) interface 2212, a sensor assembly 2214, and a communication assembly 2216.

Generally, the processing assembly 2202 controls an entire operation of the terminal device 2200, e.g., operations associated with display, phone call, data communication, camera operation and recording operation. The processing assembly 2202 includes at least one processor 2220 to execute an instruction, so as to implement all of, or a part of, the steps of the above-mentioned method. In addition, the processing assembly 2202 includes at least one module for the interaction between the processing assembly 2202 and the other assembly. For example, the processing assembly 2202 includes a multi-media module for the interaction between the multi-media assembly 2208 and the processing assembly 2202.

The memory 2204 is configured to store therein various types of data to support the operation of the terminal device 2200. Examples of such data include instructions for any application or method operated on the terminal device 2200, contact data, phonebook data, messages, pictures, video, etc. The memory 2204 may be implemented in the form of any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic disk, or an optical disk.

The power source assembly 2206 provides power to various assemblies of the terminal device 2200. The power source assembly 2206 may include a power management system, one or more power sources, and any other assemblies associated with the generation, management and distribution of power in the terminal device 2200.

The multi-media assembly 2208 includes a screen for providing an output interface between the terminal device 2200 and a user. In some embodiments of the present disclosure, the screen may include a Liquid Crystal Display (LCD) and a Touch Panel (TP). When the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a period of time and a pressure associated with the touch or swipe action. In some embodiments of the present disclosure, the multi-media assembly 2208 includes a front-facing camera and/or a rear-facing camera. When the terminal device 2200 is in an operating mode, such as a shooting mode or a video mode, the front-facing camera and/or the rear-facing camera may receive external multi-media data. Each of the front-facing camera and the rear-facing camera may be a fixed optical lens system or has focal length and optical zoom capability.

The audio assembly 2210 is configured to output and/or input audio signals. For example, the audio assembly 2210 includes a microphone (MIC) configured to receive an external audio signal when the terminal device 2200 is in an operating mode, such as a call mode, a recording mode, and a voice recognition mode. The received audio signal may be further stored in the memory 2204 or transmitted via the communication assembly 2216. In some embodiments of the present disclosure, the audio assembly 2210 further includes a speaker to output audio signals.

The I/O interface 2212 provides an interface between the processing assembly 2202 and peripheral interface modules, such as a keyboard, a click wheel, buttons, and the like. The buttons may include, but not limited to, a home button, a volume button, a starting button, and a locking button.

The sensor assembly 2214 includes one or more sensors to provide status assessments about various aspects of the terminal device 2200. for example, the sensor assembly 2214 may detect an open/closed status of the terminal device 2200, relative positioning of assemblies, e.g., the display and the keypad, of the terminal device 2200, a change in a position of the terminal device 2200 or an assembly of the terminal device 2200, a presence or absence of user contact with the terminal device 2200, an orientation or an acceleration/deceleration of the terminal device 2200, and a change in a temperature of the terminal device 2200. The sensor assembly 2214 may include a proximity sensor configured to detect the presence of nearby objects without any physical contact. The sensor assembly 2214 may also include a light sensor, such as a Complementary Metal Oxide Semiconductor (CMOS) or Charge-Coupled Device (CCD) image sensor, for use in imaging applications. In some embodiments of the present disclosure, the sensor assembly 2214 may also include an accelerometer sensor, a gyroscope sensor, a magnetic sensor, a pressure sensor, or a temperature sensor.

The communication assembly 2216 is configured to facilitate wired or wireless communication between the terminal device 2200 and other devices. The terminal device 2200 may access a wireless network based on a communication standard, such as Wi-Fi, 2G or 3G, or a combination thereof. In an exemplary embodiment of the present disclosure, the communication assembly 2216 receives a broadcast signal or broadcast associated information from an external broadcast management system via a broadcast channel. In an exemplary embodiment of the present disclosure, the communication assembly 2216 further includes a Near Field Communication (NFC) module to facilitate short-range communication. For example, the NFC module may be implemented based on an RF Identification (RFID) technology, an Infrared Data Association (IrDA) technology, an Ultra-Wide Band (UWB) technology, a Blue Tooth (BT) technology, and other technologies.

In the exemplary embodiment of the present disclosure, the terminal device 2200 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above-mentioned method.

FIG. 23 is a block diagram of a network side device 2300 according to the embodiments of the present disclosure. For example, the network side device 2300 is provided as a network side device. As shown in FIG. 23, the network side device 2300 includes a processing assembly 2322, which further includes at least one processor and memory resources represented by a memory 2332 for storing therein instructions to be executed by the processing assembly 2322, e.g., applications. The applications stored in the memory 2332 may include one or more modules each corresponding to one group of instructions. In addition, the processing assembly 2322 is configured to execute the instructions, so as to implement any method for the network side device, e.g., the method in FIG. 18.

The network side device 2300 further includes a power source assembly 2326 configured to performed power management over the network side device 2300, a wired or wireless network interface 2350 configured to couple the network side device 2300 to a network, and an Input/Output (I/O) interface 2358. The network side device 2300 may be based on an operating system stored in the memory 2332, e.g., Windows Server TM, Mac OS XTM, Unix TM, Linux TM, Free BSDTM, or the like.

In the above-mentioned embodiments of the present disclosure, the methods have been described from the perspectives of the network side device and the terminal device. in order to achieve various functions in the embodiments of the present disclosure, each of the network side device and the terminal device includes a hardware structure and a software module, i.e., the functions are achieved in the form of the hardware structure, the software module, or the combination thereof. A certain function in these functions is executed through the hardware structure, the software module, or the combination thereof.

In the above-mentioned embodiments of the present disclosure, the methods have been described from the perspectives of the network side device and the terminal device. In order to achieve various functions in the embodiments of the present disclosure, each of the network side device and the terminal device includes a hardware structure and a software module, i.e., the functions are achieved in the form of the hardware structure, the software module, or the combination thereof. A certain function in these functions is executed through the hardware structure, the software module, or the combination thereof.

The present disclosure further provides in some embodiments a communication apparatus, which includes a transceiver module and a processing module. The transceiver module includes a transmission module and/or a reception module, the transmission module is configured to achieve a transmission function, the reception module is configured to achieve a reception function, and the transceiver module is configured to achieve the transmission function and/or the reception function.

The communication apparatus may be a terminal device (e.g., the terminal device mentioned hereinabove), an apparatus in the terminal device, or an apparatus capable of being used in combination with the terminal device. Alternatively, the communication apparatus may be a network device, an apparatus in the network device, or an apparatus capable of being used in combination with the network device.

The present disclosure further provides in some embodiments another communication apparatus. The communication apparatus may be a network device, a terminal device (e.g., the terminal device mentioned hereinabove), or a chip, a chip system or a processor which supports the network device to achieve the above-mentioned method, or a chip, a chip system or a processor which supports the terminal device to achieve the above-mentioned method. The apparatus is used to achieve the above-mentioned method, which will not be particularly defined herein.

The communication apparatus may include one or more processors. The processor may be a general-purpose processor or special-purpose processor, e.g., a baseband processor or a Central Processing Unit (CPU). The baseband processor is configured to process a communication protocol as well as communication data, and the CPU is configured to control the communication apparatus (e.g., a network side device, a baseband chip, a terminal device, a terminal device chip, a Distributed Unit (DU) or a Centralized Unit (CU)), execute a computer program, and process data in the computer program.

Optionally, the communication apparatus further includes one or more memories storing therein a computer program. The computer program is executed by the processor, so that the communication apparatus executes the above-mentioned method. Optionally, the memory further stores therein data. The communication apparatus is arranged independent of, or integrated with, the memory.

Optionally, the communication apparatus further includes a transceiver and an antenna. The transceiver is also called as a transceiver unit, a transceiver machine or a transceiver circuit, and it is configured to achieve a transmission function and a reception function. The transceiver includes a receiver and a transmitter. The receiver is called as a receiving machine or a reception circuit, and it is configured to achieve the reception function. The transmitter is called as a transmitting machine or a transmission circuit, and it is configured to achieve the transmission function.

Optionally, the communication apparatus further includes one or more interface circuits. The interface circuit is configured to receive a code instruction and transmit it to the processor. The processor executes the code instruction, so that the communication apparatus implements the above-mentioned method.

In a case that the communication apparatus is a terminal device (e.g., the terminal device in the above-mentioned method embodiment), the processor is configure to implement the method in any of FIGs. 6 to 17.

In a case that the communication apparatus is a network side device, the processor is configured to implement the method in FIG. 18.

Optionally, the processor may include a transceiver for achieving a reception function and a transmission function. For example, the transceiver is a transceiver circuit, an interface, or an interface circuit. The transceiver circuit, the interface or the interface circuit for achieving the reception function and the transmission function may be arranged separately, or integrated with each other. The transceiver circuit, the interface or the interface circuit is configured to read and write codes/data, or transmit/or transfer signals.

Optionally, the processor stores therein a computer program, and the computer program is executed by the processor, so that the communication apparatus implements the above-mentioned method. The computer program may be programmed in the processor, and in this case, the processor may be implemented through hardware.

Optionally, the communication apparatus includes a circuit for implementing the above-mentioned transmission, reception or communication function. The processor and the transceiver described in the embodiments of the present disclosure may be implemented in an Integrated Circuit (IC), an analog IC, a Radio Frequency IC (RFIC), a mixed-signal IC, an Application Specific Integrated Circuit (ASIC), a Printed Circuit Board (PCB) or an electronic device. The processor and the transceiver may also be manufactured through various IC processes, e.g., Complementary Metal Oxide Semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus mentioned hereinabove may be a network device or a terminal device (e.g., the terminal device mentioned hereinabove), but the scope of the communication apparatus is not limited thereto. In addition, a structure of the communication apparatus will not be particularly defined herein. The communication apparatus may be an independent device, or a part of a large device. For example, the communication apparatus may be: (1) an independent IC, chip, chip system or chip sub-system; (2) a set of one or more ICs (optionally, the IC set also includes a memory member for storing therein data and a computer program; (3) an ASIC, e.g., a Modem; (4) a module capable of being embedded into the other device; (5) a receiver, a terminal device, a smart terminal device, a cellular phone, a wireless device, a handheld device, a mobile unit, a vehicle-mounted device, a network device, a cloud device, an artificial intelligence device, etc.; or (6) the other device.

In a case that the communication apparatus is a chip or a chip system, the chip includes a processor and an interface. There may exist one or more processors, and more than one interface.

Optionally, the chip further includes a memory for storing therein necessary computer programs and data.

**It** should be appreciated that, various illustrative logical blocks and steps listed in the embodiments of the present disclosure may be implemented through electronic hardware, computer software, or a combination thereof. Whether these functions are implemented through hardware or software depends on design requirements on an entire system and specific applications. For each specific application, various methods are used to achieve the function, which however shall not be construed as going beyond the scope of the present disclosure.

The present disclosure further provides in some embodiments a readable storage medium storing therein an instruction. The instruction is executed by a computer so as to achieve the functions in any of the above-mentioned method embodiments.

The present disclosure further provides in some embodiments a computer program product. The computer program product is executed by a computer so as to achieve the functions in any of the above-mentioned method embodiments.

In the above-mentioned embodiments of the present disclosure, all of, or a part of, the modules are implemented in the form of software, hardware, firmware or a combination thereof. When the modules are implemented in the form of software, all of, or a part of, the modules are implemented in the form of a computer program product. The computer program product includes one or more computer programs. When the computer programs are loaded onto and executed by a computer, all of, or a part of, the processes or functions in the embodiments of the present disclosure are generated by the computer. The computer may be a general-purpose computer, a special-purpose computer, a computer network, or any other programmable device. The computer program may be stored in a computer-readable storage medium, or transferred from one computer-readable storage medium to another computer-readable storage medium, e.g., transferred from one website, one computer, one server or one data center to another website, another computer, another server or another data center in a wired manner (e.g., through a co-axial cable, an optical fiber, or a digital subscriber line (DSL)) or a wireless manner (e.g., infrared, cordless or microwave). The computer-readable storage medium may be any available medium capable of being accessed by a computer, or a data storage device, e.g., a server or a data center including one or more available mediums. The available medium may be a magnetic medium (e.g., a floppy disc, a hard disc or magnetic tape), an optical medium (e.g., a digital video disc (DVD)), or a semiconductor medium (e.g., a solid state disk (SSD)).

It should be appreciated that, such words as "first" and "second" are used to differentiate the items from each other, but shall not be construed as limiting the scope of the present disclosure or indicating any sequence.

The expression "at least one" is used to indicate one or more, e.g., two, three, four or more, which will not be particularly defined herein. In the embodiments of the present disclosure, for technical features of a same kind, the words "first", "second", "third", "A", "B", "C" and "D" are used to differentiate these technical features, without indicating any sequence or sizes thereof.

Other embodiments of the present disclosure will be apparent to those skilled in the art from consideration of the specification and practice of the present disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the appended claims.

It should be appreciated that, the present disclosure is not limited to the exact construction that has been described hereinabove and illustrated in the accompanying drawings, and that various modifications and changes can be made without departing from the scope thereof. It is intended that the scope of the present disclosure only be limited by the appended claims.

## Claims

1. A wireless connection maintenance method, executed by a terminal device, comprising:
in response to the terminal device being in a first specific state and the terminal device having not obtained first system information, determining that a target cell is forbidden and/or performing a cell reselection.

2. The wireless connection maintenance method of claim 1, wherein in response to the terminal device being in the first specific state and the terminal device having not obtained the first system information, determining that the target cell is forbidden and/or performing the cell reselection comprises:
determining that the target cell is forbidden and/or performing the cell reselection in response to the terminal device being in the first specific state, the terminal device initiating a Radio Resource Control (RRC) connection and the terminal device having not obtained the first system information.

3. The wireless connection maintenance method of claim 1, wherein the determining that the target cell is forbidden and/or performing the cell reselection in response to the terminal device being in the first specific state and the terminal device having not obtained the first system information comprises:
re-obtaining the first system information in response to the terminal device being in the first specific state, the terminal device initiating an RRC connection and the terminal device having not obtained the first system information; and
in response to the first system information being not re-obtained within a predetermined duration, determining that the target cell is forbidden or performing the cell reselection.

4. The wireless connection maintenance method of claim 1, wherein the determining that the target cell is forbidden and/or performing the cell reselection in response to the terminal device being in the first specific state and the terminal device having not obtained the first system information comprises:
determining that the target cell is forbidden and/or performing the cell reselection in response to the terminal device being in the first specific state, and the terminal device having not obtained the first system information before the terminal device initiates an RRC connection recovery procedure or in a case that the terminal device initiates the RRC connection recovery procedure.

5. The wireless connection maintenance method of claim 1, wherein the determining that the target cell is forbidden and/or performing the cell reselection in response to the terminal device having not obtained the first system information comprises:
re-obtaining the first system information in response to the terminal device being in the first specific state and the terminal device having not obtained the first system information before the terminal device initiates a connection recovery procedure or in a case that the terminal device initiates a connection procedure; and
in response to the first system information being not re-obtained within a predetermined duration, determining that the target cell is forbidden and/or performing the cell reselection.

6. The wireless connection maintenance method of claim 1, wherein the determining that the target cell is forbidden and/or performing the cell reselection in response to the terminal device being in the first specific state and the terminal device having not obtained the first system information comprises:
determining that the target cell is forbidden and/or performing the cell reselection in response to the terminal device being in the first specific state, an uplink synchronization validity timer associated with the first system information expired and the terminal device having not obtained the first system information.

7. The wireless connection maintenance method of claim 1, wherein the determining that the target cell is forbidden and/or performing the cell reselection in response to the terminal device being in the first specific state and the terminal device having not obtained the first system information comprises:
determining that the target cell is forbidden and/or performing the cell reselection in response to the terminal device being in the first specific state, and the terminal device having not obtained the first system information within a predetermined duration after an uplink synchronization validity timer associated with the first system information expires.

8. The wireless connection maintenance method of any one of claims 3, 5 or 7, further comprising at least one of:
determining the predetermined duration based on a Master Information Block (MIB) or a System Information Block (SIB) sent by a network side device, wherein the MIB carries a duration configuration, and the SIB carries the duration configuration; or
determining the predetermined duration based on a system agreement.

9. The wireless connection maintenance method of claim 1, further comprising:
determining that the target cell is forbidden and/or performing the cell reselection in response to the terminal device being a Non-Terrestrial Network (NTN)-capable UE and the terminal device having not obtained the first system information.

10. The wireless connection maintenance method of claim 1, wherein the determining that the target cell is forbidden and/or performing the cell reselection in response to the terminal device being in the first specific state and the terminal device not obtaining the first system information comprises:
determining that the target cell is forbidden within a predetermined duration in response to the terminal device being in the first specific state and the terminal device having not obtained the first system information;
selecting or reselecting a cell at a same frequency as the target cell.

11. The wireless connection maintenance method of claim 10, wherein the determining that the target cell is forbidden within the predetermined duration in response to the terminal device being in the first specific state and the terminal device having not obtained the first system information comprises:
in response to a cell system message indicating that an intraFreq Reselection is allowed, determining that the target cell is forbidden within the predetermined duration in response to the terminal device being in the first specific state and the terminal device having not obtained the first system information.

12. The wireless connection maintenance method of claim 10, wherein the determining that the target cell is forbidden within the predetermined duration in response to the terminal device having not obtained the first system information comprises:
in response to a cell system message indicating that an intraFreq Reselection is allowed or the cell system message indicates that the intraFreq Reselection is not allowed, determining that the target cell is forbidden within the predetermined duration in response to the terminal device being in the first specific state and the terminal device having not obtained the first system information.

13. The wireless connection maintenance method of claim 1, wherein the determining that the target cell is forbidden and/or performing the cell reselection in response to the terminal device being in the first specific state and the terminal device having not obtained the first system information comprises:
determining that the target cell and other cells at a same frequency as the target cell are all forbidden within a predetermined duration and performing the cell reselection in response to the terminal device being in the first specific state and the terminal device having not obtained the first system information.

14. The wireless connection maintenance method of claim 13, wherein the determining that the target cell and the other cells at the same frequency as the target cell are all forbidden within the predetermined duration and performing the cell reselection in response to the terminal device being in the first specific state and the terminal device having not obtained the first system information comprises:
in response to a cell system message indicating that an intraFreq Reselection is allowed, determining that the target cell and the other cells at the same frequency as the target cell are all forbidden within the predetermined duration and performing the cell reselection in response to the terminal device being in the first specific state and the terminal device having not obtained the first system information.

15. The wireless connection maintenance method of any one of claims 11, 12 or 14, wherein the cell system message is an MIB.

16. The wireless connection maintenance method of any one of claims 1 to 15, wherein the terminal device being in the first specific state comprises at least one of:
the terminal device being in an idle state;
the terminal device being in an inactive state; or
the terminal device being in a connected state in a case that a timer T311 operates.

17. A wireless connection maintenance method, executed by a terminal device, comprising:
determining that there is valid second system information before initiating a connection establishment procedure or a connection recovery procedure in response to the terminal device being in a second specific state.

18. The wireless connection maintenance method of claim 17, wherein the determining that there is the valid second system information before initiating the connection establishment procedure or the connection recovery procedure comprises:
in response to the terminal device being a NTN-capable UE, determining that there is the valid second system information before initiating the connection establishment procedure or the connection recovery procedure.

19. The wireless connection maintenance method of claim 17, wherein the terminal device being in the second specific state comprises at least one of:
the terminal device being in an idle state; or
the terminal device being in an inactive state.

20. A wireless connection maintenance method, executed by a network side device, comprising:
establishing a wireless connection with a terminal device in response to cell reselection information sent by the terminal device.

21. The wireless connection maintenance method of claim 20, further comprising:
sending an MIB or a SIB to a terminal device, wherein the MIB carries a duration configuration, and the SIB carries the duration configuration.

22. A wireless connection maintenance apparatus, comprising:
a reselection module configured to determine that a target cell is forbidden and/or perform a cell reselection in response to a terminal device being in a first specific state and the terminal device having not obtained first system information.

23. A wireless connection maintenance apparatus, comprising:
a determination module configured to determine that there is valid second system information before initiating a connection establishment procedure or a connection recovery procedure in response to a terminal device being in a second specific state.

24. A wireless connection maintenance apparatus, comprising:
an establishment module configured to establish a wireless connection with a terminal device in response to cell reselection information sent by the terminal device.

25. A terminal device, comprising a processor and a memory, wherein the memory is configured to store therein a computer program, and the processor is configured to execute the computer program stored in the memory to implement the wireless connection maintenance method of any one of claims 1 to 16.

26. A terminal device, comprising a processor and a memory, wherein the memory is configured to store therein a computer program, and the processor is configured to execute the computer program stored in the memory to implement the wireless connection maintenance method of any one of claims 17 to 19.

27. A network side device, comprising a processor and a memory, wherein the memory is configured to store therein a computer program, and the processor is configured to execute the computer program stored in the memory to implement the wireless connection maintenance method of claim 20 or 21.

28. A communication apparatus, comprising a processor and an interface circuit, wherein the interface circuit is configured to receive a code instruction and transmit the code instruction to the processor; and the processor is configured to execute the code instruction to implement the wireless connection maintenance method of any one of claims 1 to 16.

29. A communication apparatus, comprising a processor and an interface circuit, wherein the interface circuit is configured to receive a code instruction and transmit the code instruction to the processor; and the processor is configured to execute the code instruction to implement the wireless connection maintenance method of any one of claims 17 to 19.

30. A communication apparatus, comprising a processor and an interface circuit, wherein the interface circuit is configured to receive a code instruction and transmit the code instruction to the processor; and the processor is configured to execute the code instruction to implement the wireless connection maintenance method of claim 20 or 21.

31. A computer-readable storage medium storing therein an instruction, wherein the instruction is executed to implement the wireless connection maintenance method of any one of claims 1 to 16.

32. A computer-readable storage medium storing therein an instruction, wherein the instruction is executed to implement the wireless connection maintenance method of any one of claims 17 to 19.

33. A computer-readable storage medium storing therein an instruction, wherein the instruction is executed to implement the wireless connection maintenance method of claim 20 or 21.
